# EUROPEAN PATENT APPLICATION

(11) **EP 4 307 763 A1**
(43) Date of publication of application: **17.01.2024**
(21) Application number: 21934631.9
(22) Date of filing: 03.12.2021
(51) Int. Cl.: H04W 28/12

(54) **TRAFFIC FLOW PROCESSING METHOD, APPARATUS AND SYSTEM**

(30) Priority: 31.03.2021 CN 202110352126
(71) Applicant: Huawei Technologies Co., Ltd., Longgang Shenzhen, Guangdong 518129 (CN)
(72) Inventor: YU, Youyang, Shenzhen, Guangdong 518129 (CN); SHI, Shufeng, Shenzhen, Guangdong 518129 (CN)
(74) Representative: Thun, Clemens
(86) International application number: PCT/CN2021/135508
(87) International publication number: WO 2022/205995

(57) **Abstract**

This application discloses a traffic flow processing method, apparatus, and system, to provide a method for supporting a user plane network element in flexibly performing traffic flow processing based on a traffic flow steering status of a terminal device. The method includes: A terminal device receives first policy information from a session management network element, where the first policy information includes a first processing method for an uplink traffic flow; if the terminal device meets a first condition, determines a second processing method for the uplink traffic flow or a downlink traffic flow; and sending first notification information to a user plane network element, where the first notification information is for notifying the user plane network element to determine a third processing method for the downlink traffic flow. In this method, after meeting the first condition, the terminal device sends the first notification information to the user plane network element, to assist the user plane network element in determining whether to update a steering mode of a corresponding traffic flow. This effectively prevents the user plane network element from blindly determining a downlink steering policy.

## Description

### CROSS-REFERENCE TO RELATED APPLICATIONS

This application claims priority to Chinese Patent Application No. 202110352126.5, filed with the China National Intellectual Property Administration on March 31, 2021 and entitled "TRAFFIC FLOW PROCESSING METHOD, APPARATUS, AND SYSTEM", which is incorporated herein by reference in its entirety.

### TECHNICAL FIELD

This application relates to the field of communication technologies, and in particular, to a traffic flow processing method, apparatus, and system.

### BACKGROUND

With development of communication technologies, a terminal device usually implements migration or concurrency of a traffic flow between different access technologies or different access network devices by using a multi-access protocol data unit (Protocol Data Unit, PDU) session. In a scenario in which a traffic flow is migrated or concurrent between a plurality of access technologies, it is usually necessary to perform routing or adjust a steering ratio based on a link status. Therefore, a user plane network element, for example, a UPF, needs to learn about a link status in real time, and adjust a steering mode in a timely manner.

However, in a scenario of a user equipment (User Equipment, UE) assistance (assistance) steering mode (to be specific, a terminal device performs autonomous steering based on a current status, instead of using a steering mode allocated by a network side), how to process a traffic flow is not disclosed in a conventional technology.

### SUMMARY

This application provides a traffic flow processing method, apparatus, and system in a scenario of a user equipment-assistance steering mode.

According to a first aspect, this application provides a traffic flow processing method. The method includes:
A terminal device receives first policy information from a session management network element, where the first policy information includes a first processing method for an uplink traffic flow; if the terminal device meets a first condition, the terminal device determines a second processing method for the uplink traffic flow; and the terminal device sends first notification information to a user plane network element, where the first notification information is for notifying the user plane network element to determine a processing method for a downlink traffic flow corresponding to the uplink traffic flow.

Based on the foregoing solution, in this embodiment of this application, after the terminal device meets the first condition and enters an assistance steering mode (that is, after a corresponding traffic flow is processed by using the second processing method), the terminal device sends the first notification information to the user plane network element, to assist the user plane network element in determining whether to update a steering mode of the corresponding downlink traffic flow, and determining a downlink steering policy based on a request of the terminal device (that is, based on content of the first notification information). This effectively prevents the user plane network element from blindly determining the downlink steering policy when information is insufficient, so that the terminal device and the user plane network element have better mutual coordination and stronger adaptability when processing a traffic flow.

In a possible implementation method, the first policy information further includes first indication information, and the first indication information indicates that the terminal device is capable of determining a processing method for the uplink traffic flow.

Based on the foregoing solution, in this embodiment of this application, when the first policy information further includes the first indication information, it may be understood that the terminal device may perform the assistance steering mode.

In a possible implementation method, the first notification information includes: reason information based on which the terminal device determines to process the uplink traffic flow by using the second processing method; and/or first duration information in which the terminal device determines that the second processing method is valid.

Based on the foregoing solution, in this embodiment of this application, when the first notification information includes the reason information based on which the terminal device processes the uplink traffic flow by using the second processing method, the user plane network element that receives the first notification information may learn of a reason why the terminal device processes the uplink traffic flow by using the second processing method, to better determine content of a third processing method performed by the user plane network element, even time and/or duration for performing traffic flow processing based on the third processing method. And/or, when the first notification information includes the first duration information in which the terminal device uses the second processing method, the user plane network element that receives the first notification information may learn of time information in which the terminal device processes the uplink traffic flow by using the second processing method, to better determine time and/or duration for performing the third processing method by the user plane network element.

In a possible implementation method, the first notification information further includes: information about the second processing method. Based on the foregoing solution, in this embodiment of this application, when the first notification information includes the information about the second processing method, the user plane network element that receives the first notification information can learn of content of the second processing method, to better determine the content of the third processing method performed by the user plane network element.

In a possible implementation method, the information about the second processing method includes: description information and steering information of the uplink traffic flow corresponding to the downlink traffic flow; or flow description information and steering information of the downlink traffic flow.

The downlink traffic flow corresponding to the uplink traffic flow is a traffic flow formed by exchanging source and destination IP addresses. For example, a downlink traffic flow formed by exchanging source and destination IP addresses is a downlink traffic flow corresponding to an uplink flow of the source and destination IP addresses. Alternatively, the downlink traffic flow corresponding to the uplink traffic flow is uplink and downlink traffic flows that belong to a same QoS flow. In a possible implementation method, the method further includes: The terminal device receives second notification information from the user plane network element, where the second notification information includes second indication information, and the second indication information indicates whether the user plane network element changes the processing method for the downlink traffic flow.

Based on the foregoing solution, in this embodiment of this application, the terminal device may determine, based on the second notification information from the user plane network element, whether the user plane network element cooperates in changing the traffic flow processing method, for example, determine whether the user plane network element agrees to enter the assistance steering mode. This has stronger adaptability.

In a possible implementation method, if the second indication information indicates that the user plane network element does not change the processing method for the downlink traffic flow, the second notification message further includes: second duration information in which the processing method for the downlink traffic flow remains unchanged.

In a possible implementation method, the method further includes: The terminal device skips sending the first notification information to the user plane network element within time specified by the second duration information.

Based on the foregoing solution, in this embodiment of this application, the terminal device receives the duration information that is in the second notification information and that indicates not to send the first notification information to the user plane network element. This can effectively avoid a problem that the terminal device keeps sending the first notification information to the user plane network element after the user plane network element refuses to cooperate with the terminal device to use a same steering mode, thereby reducing signaling overheads.

In a possible implementation method, the method further includes: If the terminal device meets a second condition, the terminal device determines to process the uplink traffic flow by using the first processing method.

Based on the foregoing solution, in this embodiment of this application, after meeting the second condition, the terminal device determines to process the uplink traffic flow by using the first processing method. In other words, after meeting the second condition, the terminal device may resume a primary steering mode. In a possible implementation method, the method further includes: The terminal device sends third notification information to the user plane network element, to notify that the terminal device processes the uplink traffic flow by using the first processing method.

Based on the foregoing solution, in this embodiment of this application, after the terminal device meets the second condition and can resume the primary steering mode, the terminal device sends the third notification information to the user plane network element. In this way, after receiving the third notification information, the user plane network element resumes the first processing method to process the uplink traffic flow. This provides a solution to supporting the user plane network element in collaboration with the terminal device to resume the primary mode to perform downlink traffic flow steering, and has stronger adaptability.

According to a second aspect, this application provides a traffic flow processing method. The method includes:
A user plane network element receives second policy information from a session management network element, where the second policy information includes a fourth processing method for a downlink traffic flow of a terminal device; the user plane network element processes the downlink traffic flow by using the fourth processing method; the user plane network element receives first notification information from the terminal device, where the first notification information is for notifying the user plane network element to determine a processing method for the downlink traffic flow; and the user plane network element determines, based on the first notification information, to process the downlink traffic flow by using a third processing method.

Based on the foregoing solution, in this embodiment of this application, the user plane network element may be assistance, based on the first notification information sent by the terminal device, in determining whether to update a steering mode of the corresponding downlink traffic flow, and determining a downlink steering policy based on a request of the terminal device (that is, based on content of the first notification information). This effectively prevents the user plane network element from blindly determining the downlink steering policy when information is insufficient, so that the terminal device and the user plane network element have better mutual coordination and stronger adaptability when processing a traffic flow.

In a possible implementation method, the second policy information further includes second indication information, and the second indication information indicates that the user plane is capable of modifying the processing method for the downlink traffic flow.

Based on the foregoing solution, in this embodiment of this application, when the second policy information further includes the second indication information, it may be understood that the network device may perform the assistance steering mode.

In a possible implementation method, the first notification information includes: reason information based on which the terminal device determines to process an uplink traffic flow by using a second processing method.

Based on the foregoing solution, in this embodiment of this application, when the first notification information includes the reason information based on which the terminal device processes the uplink traffic flow by using the second processing method, the user plane network element that receives the first notification information may learn of a reason why the terminal device processes the uplink traffic flow by using the second processing method, to better determine content of a third processing method performed by the user plane network element, even time and/or duration for performing traffic flow processing based on the third processing method.

In a possible implementation method, the user plane network element determines the third processing method based on the reason information and the second indication information.

In a possible implementation method, the user plane network element determines the third processing method based on the reason information and a local policy of the user plane network element.

In a possible implementation method, the user plane network element determines the processing method for the downlink traffic flow based on the reason information, the second indication information, and a local policy of the user plane network element.

In a possible implementation method, the first notification information further includes: description information and steering information of the uplink traffic flow corresponding to the downlink traffic flow; or flow description information and steering information of the downlink traffic flow.

The downlink traffic flow corresponding to the uplink traffic flow is a traffic flow formed by exchanging source and destination IP addresses. For example, a downlink traffic flow formed by exchanging source and destination IP addresses is a downlink traffic flow corresponding to an uplink flow of the source and destination IP addresses. Alternatively, the downlink traffic flow corresponding to the uplink traffic flow is uplink and downlink traffic flows that belong to a same QoS flow.

Based on the foregoing solution, in this embodiment of this application, when the first notification information includes the description information and the steering information of the uplink traffic flow corresponding to the downlink traffic flow or the flow description information and the steering information of the downlink traffic flow, the user plane network element that receives the first notification information may learn of content of the second processing method, to better determine the content of the third processing method performed by the user plane network element.

In a possible implementation method, the user plane network element determines the processing method for the downlink traffic flow based on the description information and the steering information of the uplink traffic flow or the flow description information and the steering information of the downlink traffic flow.

In a possible implementation method, the user plane network element determines the third processing method based on the description information and the steering information of the uplink or downlink traffic flow.

In a possible implementation method, when the description information included in the first notification information is the downlink traffic flow, the user plane network element directly determines the downlink traffic flow based on the description information.

In a possible implementation method, when the description information included in the first notification information is the uplink traffic flow corresponding to the downlink traffic flow, the user plane network element maps the description information of the uplink traffic flow into the description information of the downlink traffic flow, and determines the downlink traffic flow based on the description information of the downlink traffic flow.

In a possible implementation method, a priority of the third processing method is higher than that of the fourth processing method.

In a possible implementation method, the method further includes: determining second duration information for using the third processing method.

In a possible implementation method, the first notification information further includes: first duration information in which the terminal device determines that the second processing method is valid. When the first notification information includes the first duration information in which the terminal device uses the second processing method, the user plane network element that receives the first notification information may learn of time information in which the terminal device processes the uplink traffic flow by using the second processing method, to better determine time and/or duration for performing the third processing method by the user plane network element.

In a possible implementation method, the second duration information is determined based on the first duration information.

In a possible implementation method, the user plane network element sends second notification information to the user plane network element, where the second notification information includes second indication information, and the second indication information indicates whether the user plane network element changes the processing method for the downlink traffic flow.

Based on the foregoing solution, in this embodiment of this application, the terminal device may determine, based on the second notification information from the user plane network element, whether the user plane network element cooperates in changing the traffic flow processing method, for example, determine whether the user plane network element agrees to enter the assistance steering mode. This has stronger adaptability.

In a possible implementation method, if the second indication information indicates that the user plane network element does not change the processing method for the downlink traffic flow, the second notification message further includes: second duration information in which the processing method for the downlink traffic flow remains unchanged.

In a possible implementation method, the method further includes: The user plane network element skips receiving, within time specified by the second duration information, the first notification information sent by the terminal device.

Based on the foregoing solution, in this embodiment of this application, the terminal device receives the duration information that is in the second notification information and that indicates not to send the first notification information to the user plane network element. This can effectively avoid a problem that the terminal device keeps sending the first notification information to the user plane network element after the user plane network element refuses to cooperate with the terminal device to use a same steering mode, thereby reducing signaling overheads.

In a possible implementation method, the method further includes: The user plane network element receives third notification information from the terminal device, where the third notification information is for notifying that the terminal device processes the traffic flow by using a first processing method.

Based on the foregoing solution, in this embodiment of this application, after the terminal device meets the second condition and can resume the primary steering mode, the terminal device sends the third notification information to the user plane network element. In this way, after receiving the third notification information, the user plane network element resumes the first processing method to process the uplink traffic flow. This provides a solution to supporting the user plane network element in collaboration with the terminal device to resume the primary mode to perform downlink traffic flow steering, and has stronger adaptability.

In a possible implementation method, the method further includes: The user plane network element processes the traffic flow by using the fourth processing method.

According to a third aspect, this application provides a traffic flow processing method. The method includes:
A terminal device receives first policy information from a session management network element, where the first policy information includes a first processing method for an uplink traffic flow; after the terminal device meets a first condition, the terminal device determines a second processing method for the uplink traffic flow or a downlink traffic flow, and processes the uplink traffic flow by using the second processing method; the terminal device determines that a second condition is met, and resumes processing the uplink traffic flow by using the first processing method; and the terminal device sends first notification information to a user plane network element, where the first notification information is for notifying that the terminal device processes the traffic flow by using the first processing method.

Based on the foregoing solution, in this embodiment of this application, after the terminal device meets the second condition and can resume a primary steering mode, the terminal device sends the third notification information to the user plane network element. In this way, after receiving the third notification information, the user plane network element resumes the first processing method to process the uplink traffic flow. This provides a solution to supporting the user plane network element in collaboration with the terminal device to resume the primary mode to perform downlink traffic flow steering, and has stronger adaptability.

In a possible implementation method, the first policy information further includes first indication information, and the first indication information indicates that the terminal device is capable of determining a processing method for the uplink traffic flow.

In a possible implementation method, the first notification information includes: reason information based on which the terminal device resumes processing the uplink traffic flow by using the first processing method.

In a possible implementation method, the first notification information further includes: information about the first processing method.

In a possible implementation method, the method further includes: The terminal device receives second notification information from the user plane network element, where the second notification information includes third indication information, and the third indication information indicates whether the user plane network element changes a processing method for the downlink traffic flow.

According to a fourth aspect, this application provides a traffic flow processing method. The method includes:
A user plane network element receives second policy information from a session management network element, where the second policy information includes a third processing method for a downlink traffic flow of a terminal device; the user plane network element processes the downlink traffic flow by using a fourth processing method; the user plane network element receives first notification information from the terminal device, where the first notification information is for notifying that the terminal device resumes processing the traffic flow by using a first processing method; and the user plane network element resumes, based on the first notification information, processing the downlink traffic flow by using the third processing method.

Based on the foregoing solution, in this embodiment of this application, after the terminal device meets a second condition and can resume a primary steering mode, the terminal device sends the third notification information to the user plane network element. In this way, after receiving the third notification information, the user plane network element resumes the first processing method to process the uplink traffic flow. This provides a solution to supporting the user plane network element in collaboration with the terminal device to resume the primary mode to perform downlink traffic flow steering, and has stronger adaptability.

In a possible implementation method, the second policy information further includes second indication information, and the second indication information indicates that the user plane is capable of determining a processing method for the downlink traffic flow.

In a possible implementation method, the first notification information includes: reason information based on which the terminal device resumes processing the uplink traffic flow by using the first processing method.

In a possible implementation method, before the user plane network element processes the downlink traffic flow by using the fourth processing method, the user plane network element receives third notification information from the terminal device, where the third notification information is for notifying the user plane network element to determine the fourth processing method for the downlink traffic flow; and the user plane network element determines the fourth processing method based on the third notification information.

In a possible implementation method, the third notification information includes: reason information based on which the terminal device determines to process the uplink traffic flow or the downlink traffic flow by using a second processing method.

In a possible implementation method, the user plane network element determines the fourth processing method based on the second indication information and the reason information based on which the terminal device determines to process the uplink traffic flow or the downlink traffic flow by using the second processing method.

In a possible implementation method, the user plane network element determines the fourth processing method based on a local policy of the user plane network element and the reason information based on which the terminal device determines to process the uplink traffic flow or the downlink traffic flow by using the second processing method.

In a possible implementation method, the user plane network element determines the fourth processing method based on the second indication information, a local policy of the user plane network element, and the reason information based on which the terminal device determines to process the uplink traffic flow or the downlink traffic flow by using the second processing method.

In a possible implementation method, the first notification information and/or the third notification information further includes: description information and steering information of the uplink traffic flow corresponding to the downlink traffic flow.

In a possible implementation method, the first notification information and/or the third notification information further includes: description information and steering information of the downlink traffic flow.

In a possible implementation method, a priority of the fourth processing method is higher than that of the third processing method.

In a possible implementation method, the third notification information further includes: first duration information in which the terminal device determines that the second processing method is valid.

In a possible implementation method, the method further includes: determining second duration information for using the fourth processing method.

In a possible implementation method, the second duration information is determined based on the first duration information.

In a possible implementation method, the user plane network element sends second notification information to the terminal device, where the second notification information includes third indication information, and the third indication information indicates whether the user plane network element changes the processing method for the downlink traffic flow.

In a possible implementation method, if the third indication information indicates that the user plane network element does not change the processing method for the downlink traffic flow, the second notification message further includes: second duration information in which the processing method for the downlink traffic flow remains unchanged.

In a possible implementation method, the method further includes: The user plane network element skips receiving, within time specified by the second duration information, the third notification information sent by the terminal device.

According to a fifth aspect, an embodiment of this application provides a traffic flow processing apparatus. The apparatus may be a terminal device, or may be a chip used in the terminal device. The apparatus has a function of implementing any method in any one of the first aspect or the possible implementations of the first aspect. This function may be implemented by using hardware, or may be implemented by executing corresponding software by hardware. The hardware or the software includes one or more modules corresponding to the foregoing function.

According to a sixth aspect, an embodiment of this application provides a traffic flow processing apparatus. The apparatus may be a user plane network element, or may be a chip used in the user plane network element. The apparatus has a function of implementing any method in any one of the second aspect or the possible implementations of the second aspect. This function may be implemented by using hardware, or may be implemented by executing corresponding software by hardware. The hardware or the software includes one or more modules corresponding to the foregoing function.

According to a seventh aspect, an embodiment of this application provides a traffic flow processing apparatus. The apparatus may be a terminal device, or may be a chip used in the terminal device. The apparatus has a function of implementing any method in any one of the third aspect or the possible implementations of the third aspect. This function may be implemented by using hardware, or may be implemented by executing corresponding software by hardware. The hardware or the software includes one or more modules corresponding to the foregoing function.

According to an eighth aspect, an embodiment of this application provides a traffic flow processing apparatus. The apparatus may be a user plane network element, or may be a chip used in the user plane network element. The apparatus has a function of implementing any method in any one of the fourth aspect or the possible implementations of the fourth aspect. This function may be implemented by using hardware, or may be implemented by executing corresponding software by hardware. The hardware or the software includes one or more modules corresponding to the foregoing function.

According to a ninth aspect, an embodiment of this application further provides a computer-readable storage medium. The computer-readable storage medium stores instructions. When the instructions are run on a computer, a processor is enabled to perform any method in any one of the first aspect to the fourth aspect or the possible implementations of the first aspect to the fourth aspect.

According to a tenth aspect, an embodiment of this application further provides a computer program product. The computer product includes a computer program. When the computer program is run, a processor is enabled to perform any method in any one of the first aspect to the fourth aspect or the possible implementations of the first aspect to the fourth aspect.

According to an eleventh aspect, an embodiment of this application further provides a chip system, including a processor and a memory. The memory is configured to store a computer program. The processor is configured to invoke the computer program from the memory and run the computer program, so that a device on which the chip system is installed performs any method in any one of the first aspect to the fourth aspect or the possible implementations of the first aspect to the fourth aspect.

According to a twelfth aspect, an embodiment of this application further provides a traffic flow processing system, including a session management network element, a user plane network element, and the like.

The session management network element is configured to send policy information to the user plane network element, where the policy information includes a processing method for a downlink traffic flow of a terminal device.

The user plane network element is configured to: receive the policy information from the session management network element; process the downlink traffic flow by using a fourth processing method; receive first notification information from the terminal device, where the first notification information is for notifying the user plane network element to determine the processing method for the downlink traffic flow; and determine, based on the first notification information, to process the downlink traffic flow by using a third processing method.

### BRIEF DESCRIPTION OF DRAWINGS

FIG. 1 is a schematic diagram of a scenario in which a traffic flow is transmitted between different access technologies or different access network devices in a conventional technology;
FIG. 2 is a schematic diagram of a first traffic flow processing system according to this application;
FIG. 3 is a schematic diagram of a second traffic flow processing system according to this application;
FIG. 4 is a schematic flowchart of a first traffic flow processing method according to this application;
FIG. 5A and FIG. 5B are a schematic flowchart of a first traffic flow processing scenario according to this application;
FIG. 6 is a schematic flowchart of a second traffic flow processing method according to this application;
FIG. 7 is a schematic flowchart of a second traffic flow processing scenario according to this application;
FIG. 8 is a schematic diagram of a traffic flow processing apparatus according to this application; and
FIG. 9 is a schematic diagram of another traffic flow processing apparatus according to this application.

### DESCRIPTION OF EMBODIMENTS

To describe the technical solutions of this application more clearly and completely, the following describes embodiments of this application with reference to the accompanying drawings.

With development of communication technologies, a terminal device usually implements migration or concurrency of a traffic flow between different access technologies or different access network devices by using a multi-access protocol data unit (Protocol Data Unit, PDU) session.

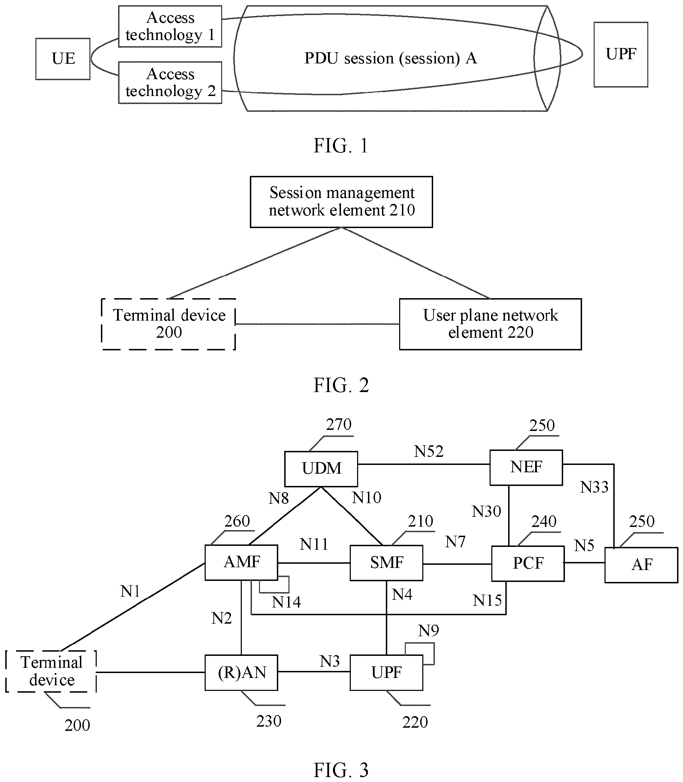

For example, as shown in FIG. 1, a PDU session (Session) A may be first transmitted by using a first technology, and then the PDU session A is transmitted by using a second technology. Alternatively, the PDU session A is transmitted by using both a first technology and a second technology, to increase bandwidth. In embodiments of this application, content of the first technology and/or the second technology includes, but are/is not limited to, a 3GPP access technology, a non-3GPP access technology, an LTE access technology, a 5G RAN access technology, a trusted non-3GPP access technology, an untrusted non-3GPP access technology, a WLAN access technology, a fixed network access technology, and the like. For example, the first access technology is a 3GPP access technology, and the second access technology is a non-3GPP access technology. Alternatively, the first access technology is a SG/NR access technology, and the second access technology is a WLAN access technology.

In a scenario in which a traffic flow is migrated or is concurrent between a plurality of access technologies, route selection or steering ratio adjustment usually needs to be performed based on a link status. Therefore, a user plane network element function needs to learn of a link status in real time, and adjust a steering mode in a timely manner.

However, in the scenario in which a traffic flow is migrated or is concurrent between a plurality of access technologies, a terminal device usually performs autonomous steering based on a current status of the terminal device, instead of performing network side allocation. This is referred to as a user equipment-assistance (user equipment-assistance) steering mode. For example, when the terminal device has low power, the terminal device may choose to migrate all traffic flows to one access technology side for transmission, and then disable a signal on the other access side, to save power.

However, currently, in the user equipment-assistance steering mode, a specific behavior of the user plane network element after the terminal device enters the assistance mode is not disclosed. In addition, because adjustment of the steering mode entered by the terminal device is an autonomous behavior, the user plane network element cannot perform corresponding steering adjustment on a downlink traffic flow based on a request of the terminal device.

To resolve this problem, embodiments of this application provide a traffic flow steering method. The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WIMAX) communication system, or a 5th generation (5th generation, 5G) system or new radio (NR), or may be applied to a future communication system or another similar communication system, for example, a 6G system.

The 5G system (which may also be referred to as a new radio system) is used as an example. Specifically, for an existing traffic flow steering process, embodiments of this application provide a corresponding traffic steering solution to a problem that a user plane network element cannot perform corresponding steering adjustment on a downlink traffic flow based on a request of a terminal device, to effectively improve a traffic flow steering mechanism.

For ease of understanding of embodiments of this application, a communication system shown in FIG. 2 is first used as an example to describe in detail the communication system to which embodiments of this application are applicable. As shown in FIG. 2, the communication system includes a terminal device 200, a session management network element 210, and a user plane network element 220. There may be a plurality of terminal devices 200.

The terminal device 200 is a device that provides voice and/or data connectivity for a user, and may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

The session management network element 210 is mainly responsible for establishing a corresponding session connection on a network side when a user initiates a service, to provide a specific service for the user.

The session management network element 210 in embodiments of this application may be an SMF, or may be another network element that has a function of the session management network element in embodiments of this application. This is not limited herein.

For example, a data packet forwarding policy, a QoS policy, and the like are delivered to the user plane network element based on an interface between the SMF and the user plane network element.

The user plane network element 220 is mainly responsible for packet data packet forwarding, QoS control, charging information statistics collection, and the like.

The user plane network element in embodiments of this application may be a UPF, or may be another network element that has a function of the user plane network element in embodiments of this application. This is not limited herein.

In embodiments of this application, the terminal device may be handed over from a 4G communication system to a 5G communication system, or may be handed over from the 5G communication system to the 4G communication system. This is not specifically limited.

Further, in embodiments of this application, the communication system may further include another device, which is not specifically limited to the following content.

For example, the communication system may further include a (radio) access network (radio access network, (R)AN) network element 230, a policy control function (policy control function, PCF) network element 240, and a network exposure function (Network Exposure Function, NEF)/application function (Application Function, AF) network element 250, an access and mobility management function (access and mobility management function, AMF) network element 260, a unified data management (unified data management, UDM) network element 270, and the like shown in FIG. 3.

The RAN network element 230 is configured to provide a network access function for an authorized terminal device in a specific area, and is capable of using transmission tunnels of different quality of service based on a level of the terminal device, a service requirement, and the like.

The RAN network element can manage a radio resource, provide an access service for the terminal device, and further complete forwarding of a control signal and terminal device data between the terminal device and a core network. The RAN device in this application is a device that provides a wireless communication function for the terminal device, and the RAN device is also referred to as an access network device. The RAN device in this application includes but is not limited to: a next-generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmission and reception point (transmitting and receiving point, TRP), a transmission point (transmitting point, TP), a mobile switching center, and the like.

The PCF network element 240 is mainly configured to generate a control policy based on request information of the AF, an operator policy, user subscription information, and the like, to control a network behavior; and deliver a control policy to a control plane network element for policy execution.

The NEF/AF network element 250 is mainly configured to initiate a network reservation request that carries traffic descriptor information (such as an IP 5-tuple and application IP) and a requested network resource (which may be an identifier negotiated by the AF and an operator in advance, for example, single network slice selection assistance information (Single Network Slice Selection Assistance Information, S-NSSAI)).

The AMF network element 260 is mainly configured to perform mobility management in a mobile network, for example, user location update, user network registration, and user handover.

The UDM network element 270 is a network element that mainly manages subscription information of the terminal device.

In the system architecture shown in FIG. 3, names and functions of interfaces between network elements are as follows:
(1) N7 is an interface between the PCF and the SMF, and is configured to deliver a PDU session and a service data flow control policy.
(2) N15 is an interface between the PCF and the AMF, and is configured to deliver a control policy for terminal device mobility and network selection.
(3) N5 is an interface between the AF and the PCF and is configured to deliver an application service request (carrying a quality of service QoS requirement of a service for bandwidth, a resource preemption priority, or the like) and report a network event (such as a type of radio access to a network by a user, and 3G and 4G access modes).
(4) N4 is an interface between the SMF and the user plane network element, and is configured to transfer information between a control plane and a user plane, including delivery of a forwarding rule, a QoS control rule, and a traffic statistics collection rule from the control plane to the user plane and reporting of user plane information (such as application information and usage monitoring information detected on the user plane).
(5) N11 is an interface between the SMF and the AMF, and is configured to: transfer user plane tunnel information between the RAN and the user plane network element, transfer a control message to be sent to the terminal device, transfer radio resource control information to be sent to the RAN, and so on.
(6) N2 is an interface between the AMF and the RAN, and is configured to: transfer radio bearer control information from a core network side to the RAN, and so on.
(7) N1 is an interface between the AMF and the terminal device, is independent of access, and is configured to transfer a QoS control rule to the terminal device, and so on.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems. It should be understood that FIG. 2 and FIG. 3 are merely simplified schematic diagrams of examples for ease of understanding. The communication system may further include another network device or may further include another terminal, which is not shown in FIG. 2 and FIG. 3.

It should be understood that, "network element" in embodiments of this application may also be referred to as an entity, a device, an apparatus, a module, or the like. This is not particularly limited in this application. In addition, in this application, for ease of understanding and description, "network element" is omitted in some descriptions. For example, the UPF network element is referred to as a UPF for short. In this case, the "UPF network element" should be understood as a UPF network element or a UPF entity. Descriptions of a same or similar situation are omitted below. It may be understood that the foregoing network element or function may be a network element in a hardware device, may be a software function running on dedicated hardware, or may be a virtualization function instantiated on a platform (for example, a cloud platform).

In an optional implementation of embodiments of this application, the foregoing network element or function may be implemented by one device, may be jointly implemented by a plurality of devices, or may be implemented by a functional module in one device. This is not specifically limited in embodiments of this application. Network elements with same or similar functions may be disposed together.

For ease of understanding, the following further describes some terms in embodiments of this application.
(1) User equipment-assistance (user equipment-assistance) steering mode: In embodiments of this application, the assistance steering mode indicates that a terminal device performs autonomous steering based on an internal status, that is, the terminal device selects one or more transmission links for an uplink traffic flow.
(2) A downlink traffic flow corresponding to an uplink traffic flow is a traffic flow formed by exchanging source and destination IP addresses. For example, a downlink traffic flow formed by exchanging source and destination IP addresses is a downlink traffic flow corresponding to an uplink flow of the source and destination IP addresses. Alternatively, the downlink traffic flow corresponding to the uplink traffic flow is uplink and downlink traffic flows that belong to a same QoS flow.

In addition, in an optional implementation of embodiments of this application, when the terminal device performs the assistance steering mode, the terminal device notifies a user plane network element to keep a steering mode of the downlink traffic flow consistent with an uplink steering mode.

In addition, the terms "system" and "network" in embodiments of this application may be used interchangeably. "At least one" means one or more, and "a plurality of" refers to two or more. The term "and/or" is an association relationship for describing associated objects and represents that three relationships may exist. For example, A and/or B may represent the following three cases: Only A exists, both A and B exist, and only B exists, where A and B may be singular or plural. A character "/" generally indicates an "or" relationship between the associated objects. At least one (piece) of the following items or a similar expression thereof refers to any combination of these items, including a single item (piece) or any combination of plural (pieces) of items. For example, at least one of a, b, or c may represent: a; b; c; a and b; a and c; b and c; or a, b, and c, where a, b, and c may be one or more.

Unless otherwise specified, ordinal numbers such as "first" and "second" mentioned in embodiments of this application are used to distinguish a plurality of objects, and are not used to limit a sequence, a time sequence, a priority, or an importance degree of the plurality of objects. In addition, the terms "include" and "have" in embodiments of this application, the claims, and the accompanying drawings are not exclusive. For example, a process, a method, a system, a product, or a device that includes a series of steps or modules is not limited to the listed steps or modules, and may further include steps or modules that are not listed.

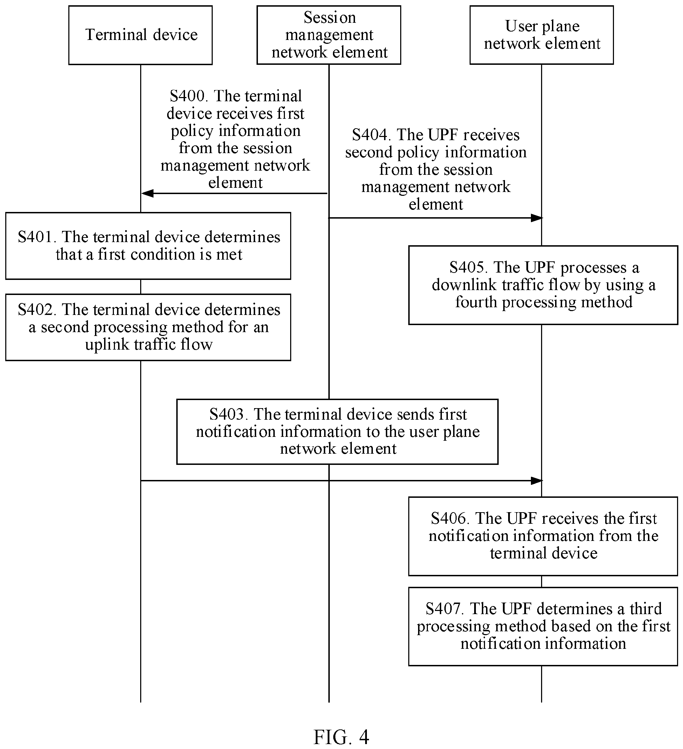

Specifically, as shown in FIG. 4, steps of a traffic flow processing method provided in an embodiment of this application are as follows:
S400. A terminal device receives first policy information from a session management network element, where the first policy information includes a first processing method for an uplink traffic flow.

In an optional implementation of this embodiment of this application, the first processing method may be understood as a primary steering mode in which the session management network element indicates the terminal device to perform traffic flow processing.

For example, it is assumed that a steering mode includes an active-standby (Active-Standby) mode, a smallest delay (Smallest Delay) mode, a load-balancing (Load-Balancing) mode, a priority-based (priority-based) mode, and the like.

If the first processing method is the active-standby (Active-Standby) mode, it indicates that the session management network element indicates the terminal device to use the active-standby mode as the primary steering mode to perform traffic flow steering.

Further, the first policy information further includes first indication information, and the first indication information indicates that the terminal device is capable of determining a processing method for the uplink traffic flow.

S401. The terminal device determines that a first condition is met.

In an optional implementation of this embodiment of this application, that the terminal device determines that the first condition is met may be understood as: The terminal device determines that entering the assistance steering mode is met.

It should be understood that, in this embodiment of this application, the first condition is not limited to entering the assistance steering mode, meeting the assistance steering mode, or the like. Any steering mode applicable to this embodiment of this application falls within the protection scope of this embodiment of this application.

In an optional implementation of this embodiment of this application, the first condition may be an internal condition of the terminal device.

For example, the terminal device may determine, based on a current status of the terminal device, whether the first condition is met, that is, determine whether to trigger the terminal device to enter the assistance steering mode.

Further, the terminal device may determine, based on the current status of the terminal device, which traffic flows of the terminal device enter the assistance steering mode, that is, determine a target traffic flow that enters the assistance steering mode.

For example, when a battery level of the terminal device is lower than a battery level threshold, traffic flows 1 to 3 are triggered to enter the assistance steering mode. It is assumed that the battery level threshold is 10%, and a current battery level of the terminal device is 9%. The terminal device determines that the battery level of the terminal device is lower than the battery level threshold 9%. Therefore, the terminal device triggers the traffic flows 1 to 3 to enter the assistance steering mode.

S402. The terminal device determines a second processing method for the uplink traffic flow or a downlink traffic flow.

In an optional implementation of this embodiment of this application, that the terminal device determines the second processing method for the uplink traffic flow or the downlink traffic flow may be understood as: The terminal device determines a steering solution in which the terminal device determines that the uplink traffic or the downlink traffic flow enters the assistance steering mode.

After the uplink traffic flow or the downlink traffic flow of the terminal device enters the assistance steering mode, the terminal device does not perform steering on the uplink traffic flow in the primary steering mode, but the terminal device determines a steering mode.

For example, the terminal device selects one access technology to transmit the uplink traffic flow, or transmits, based on a steering ratio determined by the terminal device, the uplink traffic flow using two access technologies.

Further, in this embodiment of this application, when determining the second processing method for the uplink traffic flow or the downlink traffic flow, the terminal device needs to determine, based on the first indication information in the first policy information, that the terminal device may determine a processing method for the uplink traffic flow or the downlink traffic flow.

S403. The terminal device sends first notification information to a user plane network element, where the first notification information is for notifying the user plane network element to determine a third processing method for the downlink traffic flow corresponding to the uplink traffic flow.

It may be understood that the terminal device sends the first notification information to the user plane network element, to assist the user plane network element in determining whether to update a steering mode of a corresponding traffic flow.

In an optional implementation of this embodiment of this application, the terminal device sends the first notification information to the user plane network element, to request the user plane network element to use a same steering mode as the terminal device for the downlink traffic flow.

The first notification information may be a new message proposed in a process of a traffic flow steering method in this application. Alternatively, the first notification information may be an improvement on a request sent by the terminal device to the user plane network element. For example, the first notification information may be a PMF request message.

The third processing method may be consistent with the steering method requested by the terminal device, or may be another steering method determined by the user plane network element based on an actual situation.

S404. The user plane network element receives second policy information from the session management network element, where the second policy information includes a fourth processing method for the downlink traffic flow of the terminal device.

In an optional implementation of this embodiment of this application, the user plane network element searches, based on a description of the uplink traffic flow or the downlink traffic flow, for the second policy information corresponding to the downlink traffic flow. If the second policy information does not include a second indication, the user plane network element processes a traffic flow based on the fourth processing method. Otherwise, the user plane network element determines, based on at least one of a cause value sent by the terminal device or a local policy, to process the traffic flow based on the third processing method or the fourth processing method. For example, when the second policy includes the second indication, the user plane network element determines the third processing method based on a flow description and steering information in the first notification message, and processes the downlink traffic flow based on the third processing method. In addition, the user plane network element sets a validity period for the third processing solution. After a validity period expires, the user plane network element processes the downlink traffic flow based on the fourth processing method.

In an optional implementation of this embodiment of this application, the fourth processing method may be understood as a primary steering mode in which the session management network element indicates the user plane network element to perform traffic flow processing.

S405. The user plane network element processes the downlink traffic flow by using the fourth processing method.

S406. The user plane network element receives the first notification information from the terminal device.

S407. The user plane network element determines the third processing method based on the first notification information. In an optional implementation of this embodiment of this application, the user plane network element determines the third processing method based on the first notification information and a current status of the user plane network element.

In an optional implementation of this embodiment of this application, the user plane network element determines the third processing method based on the first notification information, the second policy information, and a current status of the user plane network element.

If the user plane network element uses, based on the first notification information, the same steering mode as the terminal device for the downlink traffic flow, the third processing method may be the second processing method. If the user plane network element determines, based on the first notification information, that the user plane network element does not use the same steering mode as the terminal device for the downlink traffic flow, the third processing method may be the fourth processing method, or may be another processing method determined based on an actual situation. This is not limited in this embodiment of this application.

According to the foregoing method, in this embodiment of this application, after the terminal device meets the first condition and enters the assistance steering mode (that is, after a corresponding traffic flow is processed by using the second processing method), the terminal device sends the first notification information to the user plane network element, to assist the user plane network element in determining whether to update a steering mode of the corresponding downlink traffic flow, and determining a downlink steering policy based on a request of the terminal device (that is, based on content of the first notification information). This effectively prevents the user plane network element from blindly determining the downlink steering policy when information is insufficient, so that the terminal device and the user plane network element have better mutual coordination and stronger adaptability when processing a traffic flow. It should be understood that, the traffic flow steering steps in FIG. 4 constitute no limitation on this embodiment of this application. For example, S404 and S405 and S400 to S403 are not performed in a particular sequence. S404 and S405 may be performed before any step of S400 to S403. In addition, in a process of performing the traffic flow steering method in this embodiment of this application, adaptive adjustment or deformation may be performed on the foregoing steps based on an actual situation.

Further, in an optional implementation of this embodiment of this application, the first notification information may include a part or all of the following content:

### Content 1: Reason information based on which the terminal device determines to process the uplink traffic flow or the downlink traffic flow by using a second processing method

The reason information may indicate an internal state of the terminal device, indicate a reason why the terminal device enters the assistance steering mode, or indicate a link status, an access technology state, a user preference, or the like.

For example, the reason information includes an indication of a low battery level, an indication of low power consumption, a resource optimization indication, a link congestion indication, an indication of a weak access signal, a user preference indication, or the like.

### Content 2: First duration information in which the terminal device uses the second processing method

The first duration information may be specific valid duration, for example, indicates valid duration in which a current status lasts, valid duration in which the assistance steering mode lasts, or valid duration of the steering information sent by the terminal device.

In an optional implementation of this embodiment of this application, the valid duration may be monitored by setting a timer. For example, if the valid duration is 5 minutes, timing duration of the timer is set to 5 minutes. When the timer runs normally, it indicates that the current status lasts, or the assistance steering mode lasts. When the timer expires, the current state is terminated, or the assistance steering mode is terminated.

Alternatively, the first duration information may be a specific time point (for example, 3:00 PM) or a time period (for example, 2:00 PM to 3:00 PM).

### Content 3: Information about the second processing method

The information about the second processing method may be traffic flow description information, steering information, or the like of the traffic flow.

In an optional implementation of this embodiment of this application, the traffic flow description information may be flow description information of the uplink traffic flow and/or the downlink traffic flow.

The steering information includes a steering solution that is for the downlink traffic flow and that is requested by the terminal device, or is a steering solution that is used by the terminal device for the uplink traffic flow, and specifically includes an access technology indication, or an access technology and steering ratio information.

When the traffic flow description information is the downlink traffic flow, the user plane network element may directly determine the downlink traffic flow based on the description information.

When the traffic flow description information is the uplink traffic flow corresponding to the downlink traffic flow, the user plane network element maps the description information of the uplink traffic flow into description information of the downlink traffic flow, and determines the downlink traffic flow based on the description information of the downlink traffic flow.

When the first notification information includes the first duration information in which the terminal device uses the second processing method that is valid, in an optional implementation of this embodiment of this application, after determining the third processing method, the user plane network element may alternatively determine the second duration information in which the traffic flow is processed by using the third processing method.

Specifically, the second duration information is determined by the user plane network element based on the first duration information, and the second duration information may be less than or equal to the first duration information.

In an optional implementation of this embodiment of this application, within valid time of the third processing method, a priority of the third processing method is higher than that of the fourth processing method. It may be understood that in this embodiment of this application, when performing traffic flow processing, the user plane network element uses the fourth processing method, and preferentially uses the third processing method to process the traffic flow only within specified duration or specific time.

Further, in this embodiment of this application, after receiving the first notification information, the user plane network element may further send second notification information to the terminal device. The second notification information includes second indication information, and the second indication information indicates whether the user plane network element changes the processing method for the downlink traffic flow.

The second notification information may be understood as response information fed back by the user plane network element to the terminal device after receiving the first notification information. In this way, the terminal device is informed of whether the user plane network element uses a processing method consistent with that of the terminal device for the traffic flow, and the like.
in an optional implementation of this embodiment of this application, the second notification information may include a part or all of the following content:

### Content 1: Reason information based on which the user plane network element processes the uplink traffic flow by using the third processing method

The reason information may indicate an internal status of the user plane network element, policy information of the user plane network element, or the like.

For example, the reason information includes that the user plane network element does not support the assistance steering mode of the terminal device.

### Content 2: Second duration information in which the user plane network element does not change the processing method for the downlink traffic flow

Specifically, when the second indication information indicates that the user plane network element does not change the processing method for the downlink traffic flow, the second notification message may include the second duration information in which the processing method for the downlink traffic flow remains unchanged.

The second duration information indicates the terminal device not to send the first notification information to the user plane network element within time specified by the second duration information.

Further, in an optional implementation of this embodiment of this application, the terminal device may further send third notification information to the user plane network element device after the terminal device meets a second condition and resumes processing the uplink traffic flow by using the first processing method. The third notification information is for notifying the terminal device to process the traffic flow by using the first processing method.

Therefore, after receiving the third notification information, the user plane network element resumes processing the traffic flow by using the fourth processing method. To be specific, after the user plane network element receives that the terminal device exits the assistance steering mode, the user plane network element resumes the primary steering mode indicated by the session management network element.

It should be understood that, in this embodiment of this application, the first processing method for processing the traffic flow by the terminal device may be the primary steering mode in which the terminal device performs traffic flow processing, or may be another steering mode. For ease of description, the primary steering mode is for replacement in a subsequent example. In this embodiment of this application, the second processing method for processing the traffic flow by the terminal device may be the assistance steering mode in which the terminal device performs traffic flow processing, or may be another steering mode. For ease of description, the assistance steering mode is for replacement subsequently. In this embodiment of this application, the fourth processing method for processing the traffic flow by the user plane network element may be the primary steering mode in which the user plane network element performs traffic flow processing, or may be another steering mode. For ease of description, the primary steering mode is for replacement subsequently. In this embodiment of this application, the third processing method for processing the traffic flow by the user plane network element may be the assistance steering mode in which the user plane network element performs traffic flow processing, or may be another steering mode. For ease of description, the assistance steering mode is for replacement subsequently.

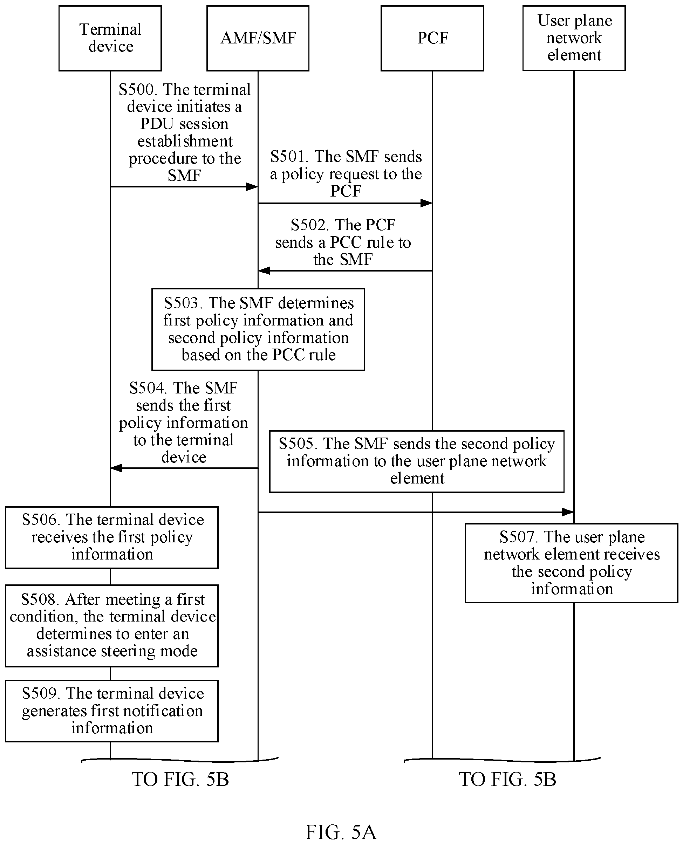

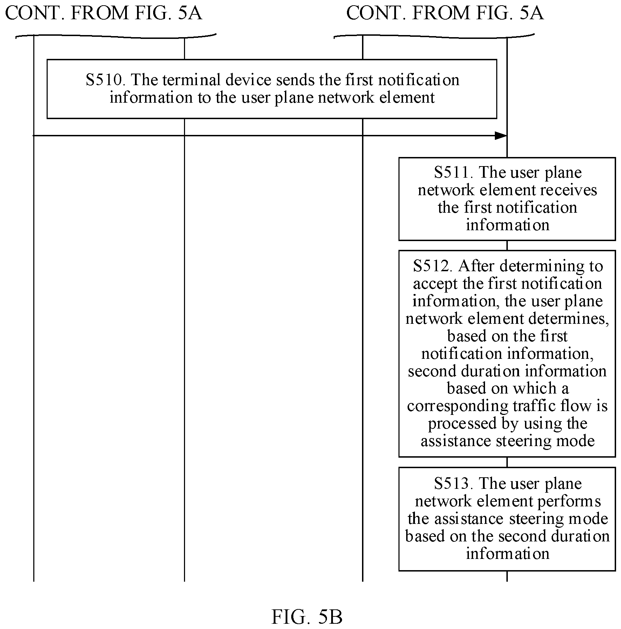

To better describe the content shown in FIG. 4, an example in FIG. 5A and FIG. 5B is used for description.

Specifically, as shown in FIG. 5A and FIG. 5B, steps of a traffic flow steering method provided in an embodiment of this application are as follows:
S500. A terminal device initiates a PDU session establishment procedure to an SMF.

In an optional implementation of this embodiment of this application, the terminal device sends a PDU session establishment request (PDU session establishment request) message to the SMF, where the PDU session establishment request includes a PDU session identifier, and an MA PDU request indication that indicates to establish an MA PDU session.

S501. The SMF sends a policy request to a PCF.

In an optional implementation of this embodiment of this application, the policy request includes the MA PDU session indication, to indicate that the PDU session is an MA PDU session.

S502. The PCF delivers a PCC rule to the SMF, where the PCC rule includes policy information. Specifically, the PCC rule includes traffic flow description information, a steering mode, and a user equipment-assistance steering mode indication.

The traffic flow description information may include one or more pieces of IP 5-tuple information (where the IP 5-tuple information includes at least one of source and destination IP addresses, source and destination port numbers, and a protocol identifier), one or more pieces of MAC address information or VLAN identifier information, at least one application identifier, an SDF, at least one QFI, or the like.

The user equipment-assistance steering mode indication indicates a supported user equipment-assistance steering mode. The assistance steering mode includes but is not limited to an active-standby (Active-Standby) mode, a smallest delay (Smallest Delay) mode, a load-balancing (Load-Balancing) mode, and a priority-based (priority-based) mode.

A steering mode allocated by a network side to a traffic flow is referred to as an active mode.

S503. The SMF determines first policy information and second policy information based on the PCC rule.

The first policy information includes a primary steering mode in which the terminal device performs traffic flow processing. The second policy information includes a primary steering mode in which a user plane network element performs traffic flow processing.

In addition, when the first policy information allows the terminal device to perform the assistance steering mode, the first policy information may further include first indication information. The first indication information indicates that the terminal device is capable of determining a processing method for the uplink traffic flow, that is, at least the terminal device can perform the assistance steering mode.

When the second policy information allows the user plane network element to cooperate with the terminal device in performing the assistance steering mode, the second policy information may further include second indication information. The second indication information indicates that the user plane network element is capable of determining a processing method for the downlink traffic flow. In an optional implementation of this embodiment of this application, the first policy information and/or the second policy information may be an ATSSS rule or a MAR (multi-access rule).

S504. The SMF sends the first policy information to the terminal device.

The first policy information may further include corresponding traffic flow description information and the like.

S505. The SMF sends the second policy information to the user plane network element.

The second policy information may further include corresponding traffic flow description information and the like.

S506. The terminal device receives the first policy information.

In an optional implementation of this embodiment of this application, the terminal device may further store the first policy information.

Further, the terminal device processes a corresponding traffic flow in the primary steering mode based on the first policy information.

S507. The user plane network element receives the second policy information.

In an optional implementation of this embodiment of this application, the user plane network element may further store the second policy information.

Further, the user plane network element processes a corresponding traffic flow in the primary steering mode based on the second policy information.

S508. After meeting a first condition, the terminal device determines to enter the assistance steering mode.

S509. The terminal device generates first notification information, where the first notification information indicates time at which the terminal device performs the assistance steering mode.

In an optional implementation of this embodiment of this application, in this embodiment of this application, before generating the first notification information, the terminal device may further first determine a steering solution in which the terminal device enters the assistance steering mode. Then, the terminal device generates the first notification information based on the steering solution in which the terminal device enters the assistance steering mode.

Assistance information in the first notification information may indicate the time at which the terminal device performs the assistance steering mode.

The assistance information may include at least one of first duration information in which the terminal device uses the assistance steering mode and reason information based on which the terminal device uses the assistance steering mode.

The first duration information may be specific valid duration, for example, indicates valid duration in which a current status lasts, valid duration in which the assistance steering mode lasts, or valid duration of the steering information sent by the terminal device. Alternatively, the first duration information may be a specific time point (for example, 3:00 PM) or a time period (for example, 2:00 PM to 3:00 PM).

In an optional implementation of this embodiment of this application, the valid duration may be monitored by setting a timer. When the timer runs normally, it indicates that the current status lasts, or the assistance steering mode lasts. When the timer expires, the current state is terminated, or the assistance steering mode is terminated.

Further, in this embodiment of this application, the first notification information may further include other information, and is not specifically limited to traffic flow description information, steering information, and the like.

The traffic flow description information is flow description information of the uplink traffic flow and/or the downlink traffic flow. The steering information includes a steering solution that is for the downlink traffic flow and that is requested by the terminal device, or is a steering solution that is used by the terminal device for the uplink traffic flow, and specifically includes an access technology indication, or an access technology and steering ratio information.

In an optional implementation of this embodiment of this application, the first notification information is a PMF request.

S510. The terminal device sends the first notification information to the user plane network element.

S511. The user plane network element receives the first notification information.

S512. After determining to accept the first notification information, the user plane network element determines, based on the first notification information, second time information based on which a corresponding traffic flow is processed by using the assistance steering mode.

In other words, the user plane network element determines, based on the first notification information, whether the assistance steering mode can be performed, and determines, after determining that the assistance steering mode can be performed, the second duration information in which the user plane network element processes the corresponding traffic flow by using the assistance steering mode.

The second duration information may be less than or equal to execution time of the secondary steering mode indicated by the first notification information. In an optional implementation of this embodiment of this application, the user plane network element receives the first notification information and a local status, and determines whether to accept a first request. Alternatively, the user plane network element receives the first notification information and the second policy information, and determines whether to accept a first request. Alternatively, the user plane network element receives the first notification information, a local status, and the second policy information, and determines whether to accept a first request.

For example, the user plane network element searches for the corresponding downlink traffic flow based on the traffic flow description information carried in the first notification information.

When the traffic flow description indicates the downlink traffic flow, the user plane network element directly determines the downlink traffic flow based on the description information of the downlink traffic flow. When the traffic flow description indicates the uplink traffic flow, the user plane network element maps the uplink traffic flow into description information of the downlink traffic flow (for example, at least one of source and destination IP addresses, source and destination port numbers, or a protocol identifier), and determines the downlink traffic flow based on the description information of the downlink traffic flow.

Then, the user plane network element determines the second policy information corresponding to the downlink traffic flow. When the second policy information does not include an assistance steering mode indication, the user plane network element still uses the active mode to perform downlink traffic steering. Otherwise, when the second policy information includes an assistance steering mode indication, the user plane network element processes the downlink traffic flow by using the assistance steering mode.

S513. The user plane network element performs the assistance steering mode based on the second duration information.

An optional implementation of this embodiment of this application is as follows:
After the user plane network element determines to accept the first notification information, the user plane network element generates third policy information based on traffic flow information, steering information, and the like that are included in the first notification information, where the third policy information includes the assistance steering mode in which the user plane network element performs traffic flow processing.

The user plane network element stores the third policy information, and sets a priority of the third policy information to be higher than a priority of the second policy information. That is, a priority of the steering solution in the assistance steering mode is set to be higher than that of the steering solution in the primary mode.

Further, the user plane network element may set, based on the second duration information, a timer for the third policy information to take effect. When the timer does not expire, the third policy information takes effect. Because the priority of the third policy information is higher than that of the second policy information, the user plane network element processes the corresponding traffic flow by using the assistance steering mode. When the timer expires, the third policy information becomes invalid, and the user plane network element processes the corresponding traffic flow by using the primary mode.

Further, after receiving the first notification information or after determining the second duration information, the user plane network element may further feed back a response message to the terminal device. The response message is for informing whether to accept the first notification information.

In an optional implementation of this embodiment of this application, the response message includes a success or rejection indication, and indicates whether the user plane network element has modified a downlink traffic flow steering rule based on the first notification information sent by the terminal device.

Specifically, if the response message includes a success indication or an accept indication, it indicates that the user plane network element has modified the downlink traffic flow steering rule based on the first notification information of the terminal device.

If the response message includes a rejection or failure indication, it indicates that the user plane network element refuses to modify the downlink traffic flow steering rule based on the first notification information of the terminal device, and continues to perform steering on the downlink traffic flow by using the primary mode.

In another optional implementation of this embodiment of this application, a message name of the response message indicates a success or a failure.

Specifically, after the user plane network element accepts the first notification information sent by the terminal device, the user plane network element feeds back a success message for the first notification information or a success message for the user equipment-assistance steering mode. After the user plane network element rejects the first notification information sent by the terminal device, the user plane network element feeds back a failure message for the first notification information or a failure message for the user equipment-assistance mode.

In addition, in this embodiment of this application, the response message may further include other information, which is not specifically limited to the following content.

Information 1: After the response message indicates that the user plane network element accepts the first notification information of the terminal device, the response message may include time information that is set by the user plane network element and that is for performing the user equipment-assistance steering mode.

For example, the response message includes information about the timer set by the user plane network element.

The timer indicates that the terminal device does not need to initiate the first notification information for a same traffic flow before the timer expires. In addition, the timer indicates that the terminal device may re-initiate the first notification information after the timer expires and when the traffic flow in the terminal device is still in the assistance steering mode. This is the same as step S510.

Information 2: After the response message indicates that the user plane network element rejects the first notification information of the terminal device, the response message may include the second duration information, to indicate to the terminal device that within time specified by the second duration information, the user plane network element does not receive the first notification information sent by the terminal device. Information 3: The response message may further include traffic flow description information, steering information, or the like.

The traffic flow description information or the steering information is for identifying a specific traffic flow or specific steering information, to indicate an accepted or rejected traffic flow or accepted or rejected steering information.

Information 4: After the response message indicates that the user plane network element rejects the first notification information of the terminal device, the response message may further include a reason for rejection by the user plane network element.

The following is an example:
An ATSSS rule received by the terminal device includes flow description information of an uplink traffic flow 1, the load-balancing mode being the primary steering mode, and an assistance steering mode indication.

When a battery level of the terminal device is less than 5%, the terminal device enters the assistance steering mode. In this mode, the terminal device transmits all data packets of the uplink traffic flow 1 on a 3GPP side, instead of simultaneously transmitting data packets of a traffic flow 1 through 3GPP and non-3GPP by using the load-balancing mode of the primary mode.

Further, after determining to enter the assistance steering mode, the terminal device sends the first request to the user plane network element, where the first request carries the flow description information of the traffic flow 1, the steering information being a 3GPP access technology indication, a validity period being 5 minutes, and a cause value being "low battery".

The user plane network element receives the first request from the terminal device, where the first request includes the flow description information of the uplink traffic flow 1, the steering information being the 3GPP access technology indication, the validity period being 5 minutes, and the cause value being "low battery".

The user plane network element searches for a downlink traffic flow corresponding to the traffic flow 1, to obtain a first steering rule of the downlink traffic flow.

Case 1: A primary steering mode included in the first steering rule is a smallest delay (Smallest Delay) steering mode and an assistance steering mode indication.

In this case, the user plane network element determines, based on the assistance steering mode indication and the cause value "low battery", to modify a downlink steering mode. In other words, the user plane network element no longer uses the smallest delay mode in the first steering rule as downlink steering, but generates a second steering rule based on the steering information sent by the terminal device. The second steering rule is a steering rule for steering the entire downlink traffic flow 1 to a 3GPP access side.

In addition, the user plane network element sets a validity period for the second steering rule to 5 minutes based on the validity period or the local policy sent by the terminal device. When the user plane network element receives a downlink data packet of the traffic flow 1, the user plane network element finds, through searching, the first steering rule that includes the smallest delay steering mode and the second steering rule for steering all data packets to the 3GPP side. When the second steering rule is valid, a priority of the second steering rule is higher than that of the first steering rule. Therefore, the user plane network element performs steering on the downlink traffic flow 1 based on the second steering rule, that is, transmits the entire downlink flows of the traffic flow 1 by using a 3GPP access side tunnel.

Case 2: A primary steering mode included in the first steering rule is a smallest delay steering mode but does not include an assistance steering mode indication.

In this case, the user plane network element still performs steering on a downlink data packet of the traffic flow 1 by using the smallest delay mode.

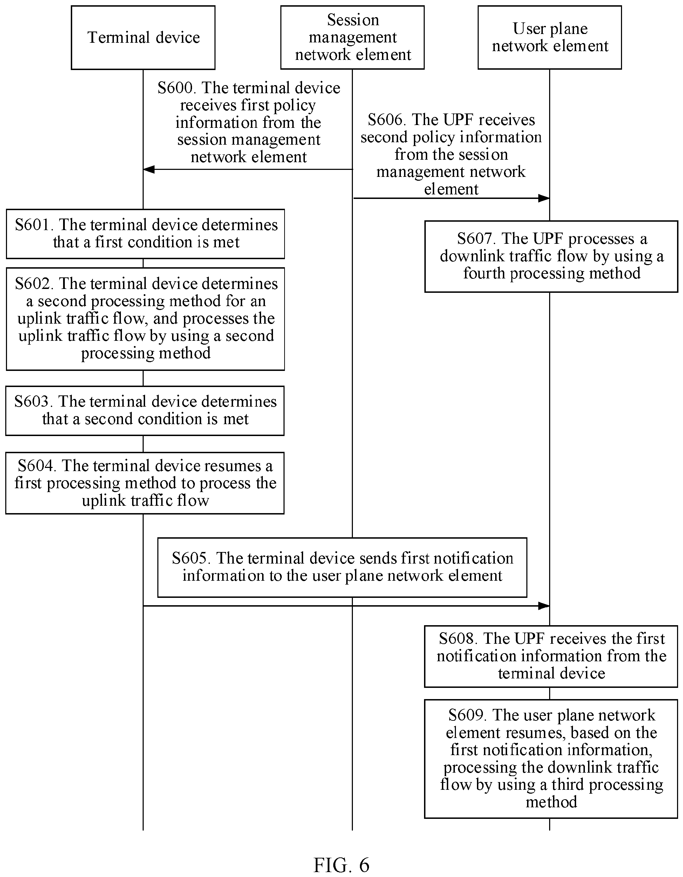

Specifically, as shown in FIG. 6, steps of another traffic flow steering method provided in an embodiment of this application are as follows:
S600. A terminal device receives first policy information from a session management network element, where the first policy information includes a first processing method for an uplink traffic flow.

In an optional implementation of this embodiment of this application, the first processing method may be understood as a primary steering mode in which the session management network element indicates the terminal device to perform traffic flow processing.

For example, it is assumed that a steering mode includes an active-standby (Active-Standby) mode, a smallest delay (Smallest Delay) mode, a load-balancing (Load-Balancing) mode, a priority-based (priority-based) mode, and the like.

If the first processing method is the active-standby (Active-Standby) mode, it indicates that the session management network element indicates the terminal device to use the active-standby mode as the primary steering mode to perform traffic flow steering.

Further, the first policy information further includes first indication information, and the first indication information indicates that the terminal device is capable of determining a processing method for the uplink traffic flow.

S601. The terminal device determines that a first condition is met.

In an optional implementation of this embodiment of this application, that the terminal device determines that the first condition is met may be understood as: The terminal device determines that entering the assistance steering mode is met.

It should be understood that, in this embodiment of this application, the first condition is not limited to entering the assistance steering mode, meeting the assistance steering mode, or the like. Any steering mode applicable to this embodiment of this application falls within the protection scope of this embodiment of this application.

In an optional implementation of this embodiment of this application, the terminal device may determine, based on a current status of the terminal device, whether the first condition is met, that is, determine whether to trigger the terminal device to enter the assistance steering mode.

Further, the terminal device may determine, based on the current status of the terminal device, which traffic flows of the terminal device enter the assistance steering mode, that is, determine a target traffic flow that enters the assistance steering mode.

For example, when a battery level of the terminal device is lower than a battery level threshold, traffic flows 1 to 3 are triggered to enter the assistance steering mode. It is assumed that the battery level threshold is 10%, and a current battery level of the terminal device is 9%. The terminal device determines that the battery level of the terminal device is lower than the battery level threshold 9%. Therefore, the terminal device triggers the traffic flows 1 to 3 to enter the assistance steering mode.

S602. The terminal device determines a second processing method for the uplink traffic flow, and processes the uplink traffic flow by using the second processing method.

In an optional implementation of this embodiment of this application, that the terminal device determines the second processing method for the uplink traffic flow may be understood as: The terminal device determines a steering solution in which the terminal device determines that the uplink traffic enters the assistance steering mode.

After the uplink traffic flow of the terminal device enters the assistance steering mode, the terminal device does not perform steering on the uplink traffic flow in the primary steering mode, but the terminal device determines a steering mode.

For example, the terminal device selects one access technology to transmit the uplink traffic flow, or transmits, based on a steering ratio determined by the terminal device, the uplink traffic flow using two access technologies.

Further, in this embodiment of this application, when determining the second processing method for the uplink traffic flow, the terminal device needs to determine, based on the first indication information in the first policy information, that the terminal device may determine the processing method for the uplink traffic flow.

S603. The terminal device determines that a second condition is met.

In an optional implementation of this embodiment of this application, that the terminal device determines that the second condition is met may be understood as: The terminal device determines that the primary steering mode is resumed.

It should be understood that, in this embodiment of this application, the second condition is not limited to entering the primary steering mode, meeting the primary steering mode, or the like. Any steering mode applicable to this embodiment of this application falls within the protection scope of this embodiment of this application.

In an optional implementation of this embodiment of this application, the terminal device may determine, based on the current status of the terminal device, whether the second condition is met, that is, determine whether to trigger the terminal device to resume the primary steering mode.

Further, the terminal device may determine, based on the current status of the terminal device, which traffic flows of the terminal device for which the primary steering mode is resumed, that is, determine a target traffic flow for which the primary steering mode is resumed.

For example, when the battery level of the terminal device is higher than the battery level threshold, the primary steering mode is triggered to be resumed for the traffic flows 1 to 3. It is assumed that the battery level threshold is 10%, and a current battery level of the terminal device is 50%. The terminal device determines that the battery level of the terminal device is higher than the battery level threshold 9%. Therefore, the terminal device triggers to resume the primary steering mode for the traffic flows 1 to 3.

S604. The terminal device resumes the first processing method to process the uplink traffic flow.

S605. The terminal device sends first notification information to a user plane network element, where the first notification information is for notifying that the terminal device processes the traffic flow by using the first processing method.

It may be understood that the terminal device sends the first notification information to the user plane network element, to notify the user plane network element that the terminal device has resumed the primary steering mode. The first notification information may be a new message proposed in a process of a traffic flow steering method in this application. Alternatively, the first notification information may be an improvement on a request sent by the terminal device to the user plane network element. For example, the first notification information may be a PMF request.

S606. The user plane network element receives second policy information from the session management network element, where the second policy information includes a fourth processing method for the downlink traffic flow of the terminal device.

In an optional implementation of this embodiment of this application, the fourth processing method may be understood as a primary steering mode in which the session management network element indicates the user plane network element to perform traffic flow processing.

S607. The user plane network element processes the downlink traffic flow by using the fourth processing method.

In an optional implementation of this embodiment of this application, after the terminal device enters the assistance steering mode, the user plane network element itself also performs traffic flow processing by using the assistance steering mode.

The fourth processing method in this embodiment of this application may be the assistance steering mode.

S608. The user plane network element receives the first notification information from the terminal device.

S609. The user plane network element resumes, based on the first notification information, processing the downlink traffic flow by using the third processing method.

According to the foregoing method, in this embodiment of this application, after the terminal device meets the second condition and can resume the primary steering mode, the terminal device sends the third notification information to the user plane network element. In this way, after receiving the third notification information, the user plane network element resumes the first processing method to process the uplink traffic flow. This provides a solution to supporting the user plane network element in collaboration with the terminal device to resume the primary mode to perform downlink traffic flow steering, and has stronger adaptability.

It should be understood that, the traffic flow steering steps in FIG. 6 constitute no limitation on this embodiment of this application. For example, S606 and S600 are not performed in a particular sequence, and S606 may be performed before S600. In addition, in a process of performing the traffic flow steering method in this embodiment of this application, adaptive adjustment or deformation may be performed on the foregoing steps based on an actual situation.

Further, in an optional implementation of this embodiment of this application, in addition to indicating the terminal device to resume processing the traffic flow by using the first processing method, the first notification information may further include a part or all of the following content:

### Content 1: Reason information based on which the terminal device resumes processing the uplink traffic flow by using the first processing method

The reason information may indicate an internal state of the terminal device, indicate a reason why the terminal device resumes the primary steering mode, or indicate a link status, an access technology state, a user preference, or the like.

For example, the reason information includes an indication of a low battery level, an indication of low power consumption, a resource optimization indication, a link congestion indication, an indication of a weak access signal, a user preference indication, or the like.

### Content 2: First duration information in which the terminal device predicts to resume the first processing method to process the uplink traffic flow

The first duration information may be specific valid duration, for example, indicates valid duration in which a current status lasts, or valid duration in which the assistance steering mode lasts.

Alternatively, the first duration information may be a specific time point (for example, 3:00 PM) or a time period (for example, 2:00 PM to 3:00 PM).

For example, if the first duration information included in the first notification information is 3:00 PM, it means that the terminal device resumes processing the traffic flow by using the first processing method at 3:00 PM. Therefore, the user plane device may also resume processing the traffic flow by using the third processing method at 3:00 PM.

### Content 3: Information about the first processing method

The information about the first processing method may be traffic flow description information, steering information, or the like of the traffic flow.

In an optional implementation of this embodiment of this application, the traffic flow description information may be flow description information of the uplink traffic flow and/or the downlink traffic flow.

The steering information includes a steering solution that is for the downlink traffic flow and that is requested by the terminal device, or is a steering solution that is used by the terminal device for the uplink traffic flow, and specifically includes an access technology indication, or an access technology and steering ratio information.

When the traffic flow description information is the downlink traffic flow, the user plane network element may directly determine the downlink traffic flow based on the description information.

When the traffic flow description information is the uplink traffic flow corresponding to the downlink traffic flow, the user plane network element maps the description information of the uplink traffic flow into description information of the downlink traffic flow, and determines the downlink traffic flow based on the description information of the downlink traffic flow.

Further, in this embodiment of this application, after receiving the first notification information, the user plane network element may further send second notification information to the terminal device. The second notification information includes second indication information, and the second indication information indicates whether the user plane network element changes the processing method for the downlink traffic flow.

The second notification information may be understood as response information fed back by the user plane network element to the terminal device after receiving the first notification information. In this way, the terminal device is informed of whether the user plane network element uses a processing method consistent with that of the terminal device for the traffic flow, and the like.
in an optional implementation of this embodiment of this application, the second notification information may include a part or all of the following content:

### Content 1: Reason information based on which the user plane network element refuses to resume processing the uplink traffic flow by using the third processing method

The reason information may indicate an internal status of the user plane network element, policy information of the user plane network element, or the like.

### Content 2: Second duration information in which the user plane network element does not change the processing method for the downlink traffic flow

Specifically, when the second indication information indicates that the user plane network element does not change the processing method for the downlink traffic flow, the second notification message may include the second duration information in which the processing method for the downlink traffic flow remains unchanged.

The second duration information indicates the terminal device not to send the first notification information to the user plane network element within time specified by the second duration information.

It should be understood that, in this embodiment of this application, the first processing method for processing the traffic flow by the terminal device may be the primary steering mode in which the terminal device performs traffic flow processing, or may be another steering mode. For ease of description, the primary steering mode is for replacement in a subsequent example. In this embodiment of this application, the second processing method for processing the traffic flow by the terminal device may be the assistance steering mode in which the terminal device performs traffic flow processing, or may be another steering mode. For ease of description, the assistance steering mode is for replacement subsequently. In this embodiment of this application, the fourth processing method for processing the traffic flow by the user plane network element may be the primary steering mode in which the user plane network element performs traffic flow processing, or may be another steering mode. For ease of description, the primary steering mode is for replacement subsequently. In this embodiment of this application, the third processing method for processing the traffic flow by the user plane network element may be the assistance steering mode in which the user plane network element performs traffic flow processing, or may be another steering mode. For ease of description, the assistance steering mode is for replacement subsequently.

To better describe the content shown in FIG. 6, the following Embodiment 2 is provided for detailed description. It should be noted that, the following embodiment is merely used as an example for description, and constitutes no limitation on embodiments of this application.

### Embodiment 2: The first notification information is a request for terminating the assistance steering mode.

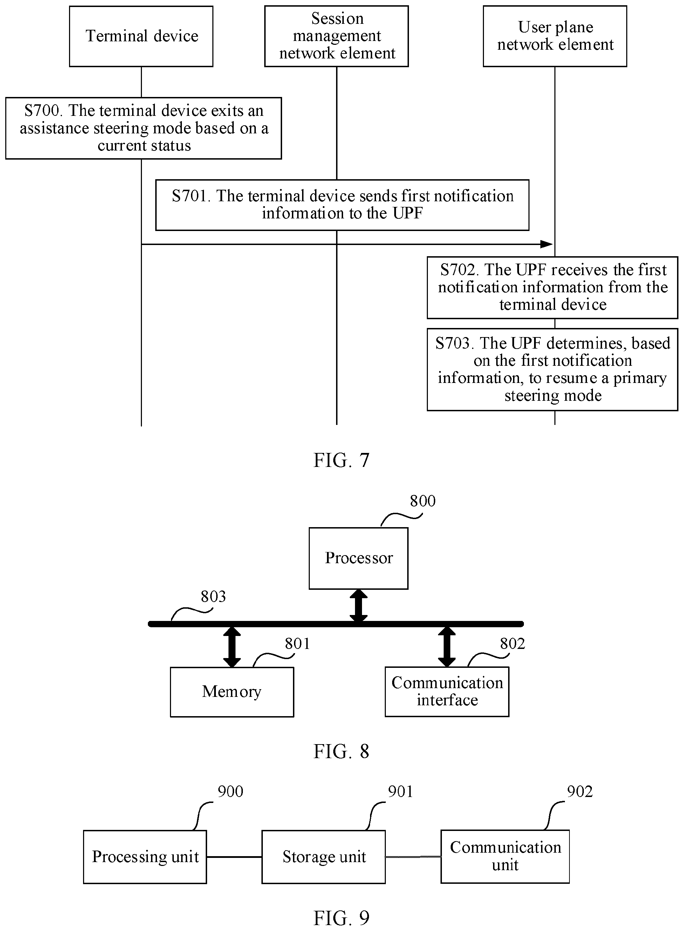

Specifically, as shown in FIG. 7, steps of a traffic flow steering method provided in an embodiment of this application are as follows:

S700. A terminal device exits an assistance steering mode based on a current status.

In an optional implementation of this embodiment of this application, when the terminal device has sufficient power (for example, a battery level exceeds 20%) and/or when a link is not congested, the terminal device exits the assistance steering mode, that is, the terminal device resumes performing steering on an uplink traffic flow by using a primary mode.

S701. The terminal device sends first notification information to a user plane network element, where the first notification information is a request for terminating the assistance steering mode.

The first notification information includes an assistance mode termination indication or a primary mode resume indication, to indicate that the assistance steering mode is terminated, or indicate that the terminal device performs steering on the uplink traffic flow by using the primary mode, or indicates that the terminal device requests to perform steering on a downlink traffic flow based on the primary mode.

In an optional implementation of this embodiment of this application, the first notification information may be a PMF request.

In an optional implementation of this embodiment of this application, the first notification information may further include traffic flow description information, to indicate that the assistance steering mode is terminated for the traffic flow, or that the primary steering mode is resumed for the traffic flow.

S702. The user plane network element receives the first notification information.

S703. The user plane network element determines, based on the first notification information, to resume the primary steering mode.

In an optional implementation of this embodiment of this application, after receiving the first notification information, the user plane network element updates a steering mode for the downlink traffic flow based on the foregoing information, that is, resumes the primary steering mode.

The steering method shown in FIG. 7 may be combined with the steering method shown in FIG. 5A and FIG. 5B. For example, after receiving an indication for terminating the assistance steering mode, the user plane network element sets third policy information to invalid. In this way, downlink traffic steering based on the primary steering mode included in the second policy information is resumed. To be specific, if the user plane network element is in the assistance steering mode, and execution duration of the assistance steering mode is still within valid duration, but the user plane network element receives the indication for terminating the assistance steering mode, the user plane network element directly resumes the primary steering mode.

In this embodiment of this application, before S700, steps S500 to S507 may be further performed. For brief description, refer to content in the foregoing case 1. Details are not described herein again.

Further, after receiving the first notification information, the user plane network element may further feed back a response message to the terminal device. The response message is for informing whether to receive the first notification information.

In an optional implementation of this embodiment of this application, the response message includes a success or rejection indication, and indicates whether the user plane network element has modified a downlink traffic flow steering rule based on the first notification information sent by the terminal device.

Specifically, if the response message includes a success indication or an accept indication, it indicates that the user plane network element has modified the downlink traffic flow steering rule based on the first notification information of the terminal device.

If the response message includes a rejection or failure indication, it indicates that the user plane network element refuses to modify the downlink traffic flow steering rule based on the first notification information of the terminal device, and continues to perform steering on the downlink traffic flow by using the assistance steering mode.

In another optional implementation of this embodiment of this application, a message name of the response message indicates a success or a failure.

Specifically, after the user plane network element accepts the first notification information sent by the terminal device, the user plane network element feeds back a success message for the first notification information or a success message for resuming the primary steering mode by the terminal device. After the user plane network element rejects the first notification information sent by the terminal device, the user plane network element feeds back a failure message for the first notification information or a failure message for resuming the primary steering mode.

In addition, in this embodiment of this application, the response message may further include a reason for rejection by the user plane network element.

According to the foregoing descriptions of the solutions in this application, it may be understood that, to implement the foregoing functions, devices in the foregoing implementations include corresponding hardware structures and/or software modules for performing the functions. A person of ordinary skill in the art should easily be aware that, in combination with units and algorithm steps of the examples described in the embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

Based on the foregoing embodiments, as shown in FIG. 8, an embodiment of this application further provides a traffic flow processing apparatus. The apparatus includes a processor 800, a memory 801, and a communication interface 802.

The processor 800 is responsible for managing a bus architecture and common processing, and the memory 801 may store data used when the processor 800 performs an operation. The transceiver communication interface 802 is configured to receive and send data under control of the processor 800 to perform data communication with the memory 801.

The processor 800 may be a central processing unit (central processing unit, CPU), a network processor (network processor, NP), or a combination of the CPU and the NP. The processor 800 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The memory 801 may include: various media that can store program code, such as a USB flash drive, a removable hard disk, a read-only memory (read-only memory, ROM), a random access memory (random access memory, RAM), a magnetic disk, or an optical disc.

The processor 800, the memory 801, and the communication interface 802 are connected to each other. In an optional implementation of this embodiment of this application, the processor 800, the memory 801, and the communication interface 802 may be connected to each other by using a bus 803. The bus 803 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

When the traffic flow processing apparatus is a terminal device, the processor 800 is configured to: read a program in the memory 801, and perform the method procedure performed by the terminal device in S400 to S404 shown in FIG. 4, perform the method procedure performed by the terminal device in S500 to S511 shown in FIG. 5A and FIG. 5B, perform the method procedure performed by the terminal device in S600 to S603 shown in FIG. 6, or perform the method procedure performed by the terminal device in S700 to S706 shown in FIG. 7.

When the traffic flow processing apparatus is a user plane network element, the processor 800 is configured to: read a program in the memory 801, and perform the method procedure performed by the user plane network element in S400 to S404 shown in FIG. 4, perform the method procedure performed by the user plane network element in S500 to S511 shown in FIG. 5A and FIG. 5B, perform the method procedure performed by the user plane network element in S600 to S603 shown in FIG. 6, or perform the method procedure performed by the user plane network element in S700 to S706 shown in FIG. 7.

As shown in FIG. 9, the present invention provides a traffic flow processing apparatus. The traffic flow processing apparatus includes: at least one processing unit 900, at least one storage unit 901, and at least one communication unit 902. The communication unit 902 is configured to receive and send data under control of the processing unit 900, and the storage unit 901 stores program code.

In an optional implementation of this embodiment of this application, the traffic flow processing apparatus is a terminal device. When the program code is executed by the processing unit 900, the processing unit 900 performs the following processes:

receiving, via the communication unit 902, first policy information from a session management network element, where the first policy information includes a first processing method for an uplink traffic flow; if the terminal device meets a first condition, determining a second processing method for the uplink traffic flow or a downlink traffic flow; and sending first notification information to a user plane network element via the communication unit 902, where the first notification information is for notifying the user plane network element to determine a third processing method for a downlink traffic flow corresponding to the uplink traffic flow.

In a possible implementation method, the first policy information further includes first indication information, and the first indication information indicates that the terminal device is capable of determining a processing method for the uplink traffic flow.

In a possible implementation method, the first notification information includes: reason information based on which the terminal device determines to process the uplink traffic flow by using the second processing method; and/or first duration information in which the terminal device determines that the second processing method is valid.

In a possible implementation method, the first notification information further includes: information about the second processing method.

In a possible implementation method, the information about the second processing method includes: description information and steering information of the uplink traffic flow corresponding to the downlink traffic flow; or flow description information and steering information of the downlink traffic flow.

In a possible implementation method, the method processing unit 900 is further configured to:
receive second notification information from the user plane network element, where the second notification information includes second indication information, and the second indication information indicates whether the user plane network element changes the processing method for the downlink traffic flow.

In a possible implementation method, if the second indication information indicates that the user plane network element does not change the processing method for the downlink traffic flow, the second notification message further includes: second duration information in which the processing method for the downlink traffic flow remains unchanged.

In a possible implementation method, the method further includes: The terminal device does not send the first notification information to the user plane network element within time specified by the second duration information.

In a possible implementation method, the method processing unit 900 is further configured to:
if the terminal device meets a second condition, determine to process the uplink traffic flow by using the first processing method.

In a possible implementation method, the method processing unit 900 is further configured to:
send third notification information to the user plane network element, to notify that the terminal device processes the uplink traffic flow by using the first processing method.

In an optional implementation of this embodiment of this application, the traffic flow processing apparatus is a user plane network element. When the program code is executed by the processing unit 900, the processing unit 900 performs the following processes:
receiving second policy information from a session management network element via the communication unit 902, where the second policy information includes a fourth processing method for a downlink traffic flow of a terminal device; processing the downlink traffic flow by using a fourth processing method; receiving first notification information from the terminal device via the communication unit 902, where the first notification information is for notifying the user plane network element to determine a third processing method for the downlink traffic flow; and determining the third processing method based on the first notification information.

In a possible implementation method, the second policy information further includes second indication information, and the second indication information indicates that the user plane is capable of determining a processing method for the downlink traffic flow.

In a possible implementation method, the first notification information includes: reason information based on which the terminal device determines to process an uplink traffic flow by using a second processing method.

In a possible implementation method, the method processing unit 900 is specifically configured to:
determining the third processing method according to the reason information and the second indication information. In a possible implementation method, the first notification information further includes:
description information and steering information of the uplink traffic flow corresponding to the downlink traffic flow; or flow description information and steering information of the downlink traffic flow.

In a possible implementation method, the method processing unit 900 is specifically configured to:
determine, by the user plane network element, the third processing method based on the description information and the steering information of the uplink or downlink traffic flow.

In a possible implementation method, a priority of the third processing method is higher than that of the fourth processing method.

In a possible implementation method, the method processing unit 900 is further configured to:
determine second duration information for using the third processing method.

In a possible implementation method, the first notification information further includes: first duration information in which the terminal device determines that the second processing method is valid.

In a possible implementation method, the method processing unit 900 is specifically configured to:
determine the second duration information based on the first duration information.

In a possible implementation method, the method processing unit 900 is further configured to:
send second notification information to the user plane network element, where the second notification information includes second indication information, and the second indication information indicates whether the user plane network element changes the processing method for the downlink traffic flow.

In a possible implementation method, if the second indication information indicates that the user plane network element does not change the processing method for the downlink traffic flow, the second notification message further includes: second duration information in which the processing method for the downlink traffic flow remains unchanged.

In a possible implementation method, the method processing unit 900 is further configured to:
skip receiving, within time specified by the second duration information, the first notification information sent by the terminal device.

In a possible implementation method, the method processing unit 900 is further configured to:
receive third notification information from the terminal device, where the third notification information is for notifying that the terminal device processes the traffic flow by using a first processing method.

In a possible implementation method, the method processing unit 900 is further configured to:
resume processing the traffic flow by using the fourth processing method.

As shown in FIG. 9, the present invention provides a traffic flow processing apparatus. The traffic flow processing apparatus includes: at least one processing unit 900, at least one storage unit 901, and at least one communication unit 902. The communication unit 902 is configured to receive and send data under control of the processing unit 900, and the storage unit 901 stores program code.

In an optional implementation of this embodiment of this application, the traffic flow processing apparatus is a terminal device. When the program code is executed by the processing unit 900, the processing unit 900 performs the following processes:
receiving, via the communication unit 902, first policy information from a session management network element, where the first policy information includes a first processing method for an uplink traffic flow; after a first condition is met, determining a second processing method for the uplink traffic flow or a downlink traffic flow, and processing the uplink traffic flow by using the second processing method; determining that a second condition is met, and resuming processing the uplink traffic flow by using the first processing method; and sending first notification information to a user plane network element via the communication unit 902, where the first notification information is for notifying that the terminal device processes the traffic flow by using the first processing method.

In a possible implementation method, the first policy information further includes first indication information, and the first indication information indicates that the terminal device is capable of determining a processing method for the uplink traffic flow.

In a possible implementation method, the first notification information includes: reason information based on which the terminal device resumes processing the uplink traffic flow by using the first processing method.

In a possible implementation method, the first notification information further includes: information about the first processing method.

In a possible implementation method, the method processing unit 900 is further configured to:
receive second notification information from the user plane network element, where the second notification information includes third indication information, and the third indication information indicates whether the user plane network element changes a processing method for the downlink traffic flow.

As shown in FIG. 9, the present invention provides a traffic flow processing apparatus. The traffic flow processing apparatus includes: at least one processing unit 900, at least one storage unit 901, and at least one communication unit 902. The communication unit 902 is configured to receive and send data under control of the processing unit 900, and the storage unit 901 stores program code.

In an optional implementation of this embodiment of this application, the traffic flow processing apparatus is a user plane network element. When the program code is executed by the processing unit 900, the processing unit 900 performs the following processes:
receiving second policy information from a session management network element via the communication unit 902, where the second policy information includes a third processing method for a downlink traffic flow of a terminal device; processing the downlink traffic flow by using a fourth processing method; receiving first notification information from the terminal device via the communication unit 902, where the first notification information is for notifying that the terminal device resumes processing the traffic flow by using a first processing method; and resuming, based on the first notification information, processing the downlink traffic flow by using the third processing method.

In a possible implementation method, the second policy information further includes second indication information, and the second indication information indicates that the user plane is capable of determining a processing method for the downlink traffic flow.

In a possible implementation method, the first notification information includes: reason information based on which the terminal device resumes processing the uplink traffic flow by using the first processing method.

In a possible implementation method, before the user plane network element processes the downlink traffic flow by using the fourth processing method, the method communication unit 902 is further configured to:
receive third notification information from the terminal device, where the third notification information is for notifying the user plane network element to determine the fourth processing method for the downlink traffic flow.

The method processing unit 900 is further configured to:
determine the fourth processing method based on the third notification information.

In a possible implementation method, the third notification information includes: reason information based on which the terminal device determines to process an uplink traffic flow by using a second processing method.

In a possible implementation method, the method processing unit 900 is specifically configured to:
determine the fourth processing method based on the second indication information and the reason information based on which the terminal device determines to process the uplink traffic flow or the downlink traffic flow by using the second processing method.

In a possible implementation method, the method processing unit 900 is specifically configured to:
determine the fourth processing method based on a local policy of the user plane network element and the reason information based on which the terminal device determines to process the uplink traffic flow or the downlink traffic flow by using the second processing method.

In a possible implementation method, the method processing unit 900 is specifically configured to:
determine the fourth processing method based on the second indication information, a local policy of the user plane network element, and the reason information based on which the terminal device determines to process the uplink traffic flow or the downlink traffic flow by using the second processing method.

In a possible implementation method, the first notification information and/or the third notification information further includes: description information and steering information of the uplink traffic flow corresponding to the downlink traffic flow.

In a possible implementation method, the first notification information and/or the third notification information further includes: description information and steering information of the downlink traffic flow.

In a possible implementation method, a priority of the fourth processing method is higher than that of the third processing method.

In a possible implementation method, the third notification information further includes: first duration information in which the terminal device determines that the second processing method is valid.

In a possible implementation method, the method processing unit 900 is further configured to:
determining second duration information for using the fourth processing method.

In a possible implementation method, the method processing unit 900 is specifically configured to:
determine the second duration information based on the first duration information.

In a possible implementation method, the method communication unit 902 is further configured to:
send second notification information to the terminal device, where the second notification information includes third indication information, and the third indication information indicates whether the user plane network element changes the processing method for the downlink traffic flow.

In a possible implementation method, if the third indication information indicates that the user plane network element does not change the processing method for the downlink traffic flow, the second notification message further includes: second duration information in which the processing method for the downlink traffic flow remains unchanged.

In a possible implementation method, the method processing unit 900 is further configured to:
skip receiving, within time specified by the second duration information, the third notification information sent by the terminal device.

Functions of the communication unit 902 and the processing unit 900 shown in FIG. 9 may be performed by the processor 800 by running the program in the memory 801, or separately performed by the processor 800.

The traffic flow processing apparatus shown in FIG. 9 may be the terminal device in the foregoing embodiments or a chip in the terminal device, or may be the user plane network element in the foregoing embodiments or a chip in the user plane network element.

As shown in FIG. 2, the present invention provides a traffic flow processing system. The traffic flow processing system includes: a terminal device 200, a session management network element 210, and a user plane network element 220.

In an optional implementation of this embodiment of this application:

The session management network element 210 is configured to: send first policy information to the terminal device, where the first policy information includes a first processing method for an uplink traffic flow; and send second policy information to the user plane network element, where the second policy information includes a fourth processing method for a downlink traffic flow of the terminal device.

The terminal device 200 is configured to: receive the first policy information from the session management network element; if the terminal device meets a first condition, determine a second processing method for the uplink traffic flow or a downlink traffic flow; and send first notification information to the user plane network element, where the first notification information is for notifying the user plane network element to determine a third processing method for the downlink traffic flow corresponding to the uplink traffic flow.

The user plane network element 220 is configured to: receive the second policy information from the session management network element; process the downlink traffic flow by using the fourth processing method; receive first notification information from the terminal device, where the first notification information is for notifying the user plane network element to determine the third processing method for the downlink traffic flow; and determine the third processing method based on the first notification information.

In another optional implementation of this embodiment of this application:

The session management network element 210 is configured to: send first policy information to the terminal device, where the first policy information includes a first processing method for an uplink traffic flow; and send second policy information to the user plane network element, where the second policy information includes a third processing method for a downlink traffic flow of the terminal device.

The terminal device 200 is configured to: receive the first policy information from the session management network element; after a first condition is met, determine a second processing method for the uplink traffic flow or the downlink traffic flow, and process the uplink traffic flow by using the second processing method; determine that a second condition is met, and resume processing the uplink traffic flow by using the first processing method; and send first notification information to the user plane network element, where the first notification information is for notifying that the terminal device processes the traffic flow by using the first processing method.

The user plane network element 220 is configured to: receive the second policy information from the session management network element; process the downlink traffic flow by using a fourth processing method; receive first notification information from the terminal device, where the first notification information is for notifying that the terminal device resumes processing the traffic flow by using a first processing method; and resume, based on the first notification information, processing the downlink traffic flow by using the third processing method.

In some possible implementations, aspects of the traffic flow steering method provided in embodiments of the present invention may alternatively be implemented in a form of a program product, including program code. When the program code is run on a computer device, the program code is for enabling the computer device to perform steps in the traffic flow steering methods according to various example implementations of the present invention described in this specification.

The program product may use any combination of one or more readable media. The readable medium may be a readable signal medium or a readable storage medium. The readable storage medium may be, for example, but is not limited to, an electrical, a magnetic, an optical, an electromagnetic, an infrared, or a semiconductor system, apparatus, or device, or any combination thereof. More specific examples (non-exhaustive) of the readable storage medium include: an electrical connection having one or more conductors, a portable disk, a hard disk drive, random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

A program product for performing traffic flow steering according to implementations of the present invention may use a portable compact disk read-only memory (CD-ROM), include program code, and may run on a server device. However, the program product in the present invention is not limited thereto. In this specification, the readable storage medium may be any tangible medium that includes or stores a program, and the program can be transmitted in information and used by an apparatus or a component or used in combination with an apparatus or a component.

The readable signal medium may include a data signal that is propagated in a baseband or as part of a cell, and carries readable program code. The propagated data signal may be in various forms, including, but not limited to, an electromagnetic signal, an optical signal, or any suitable combination thereof. The readable signal medium may alternatively be any readable medium other than the readable storage medium. The readable medium may send, propagate, or transmit a program for use by or for use in combination with a recurrent network action system, apparatus, or device.

The program code included on the readable medium may be transmitted using any suitable medium, including, but not limited to, wireless, wired, optical cable, RF, or any suitable combination thereof.

Program code for performing the operations of the present invention may be written in any combination of one or more programming languages, including object-oriented programming languages such as Java and C++, as well as conventional procedural programming languages such as "C" or similar programming languages. The program code may be executed entirely on a user computing device, partially on user equipment, as a separate software package, partially on a user computing device, partially on a remote computing device, or entirely on a remote computing device or server. In situations involving a remote computing device, the remote computing device may be connected to a user computing device through any kind of network, including a local area network (LAN) or a wide area network (WAN), or may be connected to an external computing device.

An embodiment of this application further provides a computing device-readable storage medium for a traffic flow steering method performed by a terminal device, to be specific, content is not lost after a power failure. The storage medium stores a software program, including program code. When the program code is run on a computing device, the software program can implement any one of the foregoing traffic flow steering solutions in embodiments of this application when being read and executed by one or more processors.

An embodiment of this application further provides a computing device-readable storage medium for a traffic flow steering method performed by a network device, to be specific, content is not lost after a power failure. The storage medium stores a software program, including program code. When the program code is run on a computing device, the software program can implement any one of the foregoing traffic flow steering solutions in embodiments of this application when being read and executed by one or more processors.

The foregoing describes this application with reference to block diagrams and/or flowcharts that show the method, the apparatus (system), and/or the computer program product according to embodiments of this application. It should be understood that a block in the block diagrams and/or the flowcharts and a combination of blocks in the block diagrams and/or the flowcharts may be implemented by using computer program instructions. These computer program instructions may be provided to a processor of a general-purpose computer or a dedicated computer, and/or other programmable data processing apparatuses to generate a machine such that the instructions executed by the computer processor and/or other programmable data processing apparatuses create a method for implementing a function/action specified in the block diagrams and/or flowcharts.

Correspondingly, this application may also be implemented by using hardware and/or software (including firmware, resident software, microcode, and the like). Further, in this application, a form of a computer program product on a computer-usable or computer-readable storage medium may be used, and the computer program product has computer-usable or computer-readable program code implemented in the medium for use by or uses in combination with an instruction execution system. In the context of this application, the computer-usable or the computer-readable medium may be any medium that may include, store, communicate, transmit, or transfer a program, for use by or use in combination with an instruction execution system, apparatus, or device.

Although this application has been described with reference to specific features and embodiments thereof, it is obvious that various modifications and combinations may be made to this application without departing from the spirit and scope of this application. Correspondingly, this specification and the accompanying drawings are merely example descriptions of this application defined by the appended claims, and are considered to have covered any and all modifications, variations, combinations, or equivalents that fall within the scope of this application. It is clear that a person skilled in the art can make various modifications and variations to this application without departing from the scope of this application. This application is intended to cover these modifications and variations of this application provided that they fall within the scope defined by the following claims and their equivalent technologies.

## Claims

1. A traffic flow processing method, comprising:
receiving, by a terminal device, first policy information from a session management network element, wherein the first policy information comprises a first processing method for an uplink traffic flow;
if the terminal device meets a first condition, determining, by the terminal device, a second processing method for the uplink traffic flow; and
sending, by the terminal device, first notification information to a user plane network element, wherein the first notification information is for notifying the user plane network element to determine a processing method for a downlink traffic flow corresponding to the uplink traffic flow.

2. The method according to claim 1, wherein the first policy information further comprises first indication information, and the first indication information indicates that the terminal device is capable of determining a processing method for the uplink traffic flow.

3. The method according to claim 1 or 2, wherein the first notification information comprises:
reason information based on which the terminal device determines to process the uplink traffic flow by using the second processing method; and/or
first duration information in which the terminal device determines that the second processing method is valid.

4. The method according to claim 3, wherein the first notification information further comprises: information about the second processing method.

5. The method according to claim 4, wherein the information about the second processing method comprises:
description information and steering information of the uplink traffic flow.

6. The method according to any one of claims 1 to 5, wherein the method further comprises:
receiving, by the terminal device, second notification information from the user plane network element, wherein the second notification information comprises second indication information, and the second indication information indicates whether the user plane network element changes the processing method for the downlink traffic flow.

7. The method according to claim 6, wherein if the second indication information indicates that the user plane network element does not change the processing method for the downlink traffic flow, the second notification message further comprises:
second duration information in which the processing method for the downlink traffic flow remains unchanged.

8. The method according to claim 7, wherein the method further comprises:
skipping sending, by the terminal device, the first notification information to the user plane network element within time specified by the second duration information.

9. The method according to any one of claims 1 to 8, wherein the method further comprises:
if the terminal device meets a second condition, determining, by the terminal device, to process the uplink traffic flow by using the first processing method.

10. The method according to claim 9, wherein the method further comprises:
sending, by the terminal device, third notification information to the user plane network element, to notify that the terminal device processes the uplink traffic flow by using the first processing method.

11. A traffic flow processing method, comprising:
receiving, by a user plane network element, second policy information from a session management network element, wherein the second policy information comprises a fourth processing method for a downlink traffic flow of a terminal device;
processing, by the user plane network element, the downlink traffic flow by using the fourth processing method;
receiving, by the user plane network element, first notification information from the terminal device, wherein the first notification information is for notifying the user plane network element to determine a processing method for the downlink traffic flow; and
determining, by the user plane network element based on the first notification information, to process the downlink traffic flow by using a third processing method.

12. The method according to claim 11, wherein the second policy information further comprises second indication information, and the second indication information indicates that the user plane network element is capable of modifying the processing method for the downlink traffic flow.

13. The method according to claim 11 or 12, wherein the first notification information comprises:
reason information based on which the terminal device determines to process an uplink traffic flow by using a second processing method.

14. The method according to claim 13, wherein the user plane network element determines the processing method for the downlink traffic flow based on the first notification information, comprising:
determining, by the user plane network element, the processing method for the downlink traffic flow based on the reason information and the second indication information.

15. The method according to any one of claims 11 to 14, wherein the first notification information further comprises:
description information and steering information of an uplink traffic flow corresponding to the downlink traffic flow; or flow description information and steering information of the downlink traffic flow.

16. The method according to claim 15, wherein the user plane network element determines the processing method for the downlink traffic flow based on the first notification information, comprising:
determining, by the user plane network element, the processing method for the downlink traffic flow based on the description information and the steering information of the uplink traffic flow or the flow description information and the steering information of the downlink traffic flow.

17. The method according to any one of claims 11 to 16, wherein a priority of the third processing method is higher than that of the fourth processing method.

18. The method according to any one of claims 11 to 17, wherein the method further comprises:
determining, by the user plane network element, second duration information for using the third processing method.

19. The method according to any one of claims 11 to 18, wherein the first notification information further comprises:
first duration information in which the terminal device determines that the second processing method is valid.

20. The method according to claim 19, wherein the determining second duration information for using the third processing method comprises:
determining, by the user plane network element, the second duration information based on the first duration information.

21. The method according to any one of claims 11 to 20, wherein the method further comprises:
sending, by the user plane network element, second notification information to the terminal device, wherein the second notification information comprises second indication information, and the second indication information indicates whether the user plane network element changes the processing method for the downlink traffic flow.

22. The method according to claim 21, wherein if the second indication information indicates that the user plane network element does not change the processing method for the downlink traffic flow, the second notification message further comprises:
second duration information in which the processing method for the downlink traffic flow remains unchanged.

23. The method according to claim 22, wherein the method further comprises:
skipping receiving, by the user plane network element within time specified by the second duration information, the first notification information sent by the terminal device.

24. The method according to any one of claims 11 to 23, wherein the method further comprises:
receiving, by the user plane network element, third notification information from the terminal device, wherein the third notification information is for notifying that the terminal device processes the traffic flow by using a first processing method.

25. The method according to claim 24, wherein the method further comprises:
processing, by the user plane network element, the traffic flow by using the fourth processing method.

26. A traffic flow processing apparatus, comprising one or more processors, a memory, and a transceiver, wherein
the processor is configured to read a program in the memory and perform the method according to any one of claims 1 to 10, or perform the method according to any one of claims 11 to 25.

27. A communication system, comprising:
a session management network element, configured to send policy information to a user plane network element, wherein the policy information comprises a processing method for a downlink traffic flow of a terminal device; and
the user plane network element, configured to: receive the policy information from the session management network element; process the downlink traffic flow by using a fourth processing method; receive first notification information from the terminal device, wherein the first notification information is for notifying the user plane network element to determine the processing method for the downlink traffic flow; and determine, based on the first notification information, to process the downlink traffic flow by using a third processing method.

28. A computer-readable storage medium, comprising computer instructions, wherein when the computer instructions are run on a traffic flow processing apparatus, the traffic flow processing apparatus is enabled to perform the method according to any one of claims 1 to 10 or perform the method according to any one of claims 11 to 25.

29. A computer program product, wherein the computer program product comprises computer instructions; and when the computer instructions are executed by a traffic flow processing apparatus, the traffic flow processing apparatus is enabled to perform the method according to any one of claims 1 to 10 or perform the method according to any one of claims 11 to 25.
